(19) **Europäisches Patentamt / European Patent Office / Office européen des brevets**

(11) **EP 2 874 264 A1**

(12) **EUROPEAN PATENT APPLICATION**
published in accordance with Art. 153(4) EPC

(43) Date of publication:
**20.05.2015 Bulletin 2015/21**

(21) Application number: **13817253.1**

(22) Date of filing: **28.06.2013**

(51) Int Cl.:
*H02J 3/00* (2006.01)    *G06Q 10/00* (2012.01)
*G06Q 50/06* (2012.01)    *H02J 13/00* (2006.01)

(86) International application number:
**PCT/JP2013/067927**

(87) International publication number:
**WO 2014/010442 (16.01.2014 Gazette 2014/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.07.2012 JP 2012158109**

(71) Applicants:
- **Nitto Denko Corporation**
  **Ibaraki-shi, Osaka 567-8680 (JP)**
- **Kozo Keikaku Engineering Inc.**
  **Tokyo 164-0012 (JP)**
- **Nissin Densetu Inc.**
  **Osaka-shi, Osaka 540-0012 (JP)**

(72) Inventors:
- **MATSUYAMA Takashi**
  **Kyoto-shi**
  **Kyoto 606-8501 (JP)**
- **KATO Takekazu**
  **Kyoto-shi**
  **Kyoto 606-8501 (JP)**
- **TAMURA Kento**
  **Kyoto-shi**
  **Kyoto 606-8501 (JP)**

(74) Representative: **Grünecker Patent- und Rechtsanwälte**
**PartG mbB**
**Leopoldstraße 4**
**80802 München (DE)**

(54) **ON-DEMAND MULTIPLE POWER SOURCE MANAGEMENT SYSTEM, ON-DEMAND MULTIPLE POWER SOURCE MANAGEMENT SYSTEM PROGRAM AND COMPUTER-READABLE RECORDING MEDIUM ON WHICH SAID PROGRAM IS RECORDED**

(57)    An object of the present invention is to provide an on-demand control system that supplies power to electric devices based on not predetermined priorities fixed to electric devices, but based on priorities changed according to the use status of the user. The on-demand control system can control supply of power of a commercial power source in real time in response to a power request necessary for the user and controls the supply of power according to the QoL necessary for the user through daily life. The on-demand power control system of the present invention is a multiple power source management system for an on-demand power control system, the on-demand power control system including: a plurality of power sources; a plurality of electric devices; smart taps connected to the electric devices; a multiple power source management apparatus that includes a memory and that controls supply of power to the electric devices; and a network for the multiple power source management apparatus connected through the smart taps, wherein the multiple power source management apparatus includes: power supply plan generation means for setting a power use plan of a commercial power source as initial values of a supply plan of a capacitor, searching a time zone with a maximum dissatisfaction among the time zones of the initial values to set the time zone as a time-shift destination, searching a time zone with a minimum dissatisfaction to set the time zone as a time-shift source, and repeating the process until the dissatisfaction of the time-shift destination is smaller than the dissatisfaction of the time-shift source to generate a power supply plan; supply power target value update means for setting a target value of supply power for each of the plurality of power sources and feeding back and updating an error between actual power supply amount and the supply power target value at each minimum control interval; and power and power source arbitration means for repeating a process of selecting a device with a minimum priority among an electric device that has requested power and electric devices in operation, selecting a power source with a maximum power source load factor, reducing or stopping power of the electric device, and reducing supply power of the power source by an amount of the reduced power until the following Expressions (1) and (2) are satisfied, thereby arbitrating the power and the power sources to satisfy Expressions (1) and (2) at the same time.

$$\forall a \in A, \forall s \in S: \mathrm{Pri}_a\left(\mathrm{PD}_a^{\mathrm{REQ}}\right) \geq \mathrm{LF}_s\left(\mathrm{PS}_s^{\mathrm{REQ}}\right) \qquad (1)$$

$$\sum_{a \in A} PD_a^{REQ} = \sum_{s \in S} PS_s^{RES} \qquad (2)$$

[Figure 1]

**Description**

Technical Field

The present invention relates to a storage battery management system for an on-demand power control system in a home or office network, an on-demand multiple power source management system program, and a computer-readable recording medium recording the program, and more particularly, to an on-demand multiple power source management system, an on-demand multiple power source management system program, and a computer-readable recording medium recording the program that implement a plurality of power sources for commercial power sources without restrictions in peak power, while controlling the supply of power without exceeding an upper limit of power consumption (Wh) by dynamically changing priorities between electric devices, without losing the quality of life (hereinafter, called "QoL") necessary for the user in daily life.

Background Art

An on-demand power control system is designed to realize energy management of a household or an office, and the system is intended to shift a supplier-driven "push-type" power network 180 degrees to a user, consumer-led "pull-type". The system is a system in which a home server estimates, from the utilization mode of the user, "which request of a device is most important" for power requests of devices that are various home electric products in a household, such as an air conditioner and a lighting, and performs control, that is, Energy on Demand control (hereinafter, called "EoD control"), to supply power first to an important electric device with a high priority. Hereinafter, the system will be called an "EoD control system".

The biggest advantage of using the system is that the demand side can realize energy saving and $CO_2$ emission reduction. For example, when the user sets in advance in the home server an instruction for cutting the electric bill 20%, the EoD control allows a user-driven approach for distributing only power that is cut 20%, and energy saving and $CO_2$ emission reduction can be realized in the system.

The following inventions of "Home Network" (see Patent Literature 1) and "Supply and Demand Arbitration System" (see Patent Literature 2) are known as Patent Literature related to the EoD control. The home network includes: a server (master); detection means and control means of the server; and a member (slave). The server and the member are connected through a LAN.

And n electric devices in a household are connected to sockets through n members. The detection means detects operation situations of actually operating m electric devices. The control means uses n power data transmitted from the n members to compute the power consumption used in the household, and when the computed total electric energy is equal to or greater than a threshold, outputs, to j members, control signals for controlling the power consumption of j electric devices, in which the operation state changes in steps or continuously among the m electric devices, below the threshold of the total electric energy to control the j members to limit the power.

Therefore, the server is a server that preferentially supplies power to electric devices in which the operation state is changed only by On/Off, such as electric devices like a ceiling light, a desktop light, and a coffee maker, to reduce the power consumption below the threshold of the total electric energy.

The member is called a "smart tap" nowadays, and the smart tap includes: a voltage-current sensor that measures power; a semiconductor relay for controlling power; a ZigBee module for communication; and a microcomputer with a built-in DSP that controls the entire components and that executes internal processing. The microcomputer has a function of calculating the power consumption from a current and voltage waveform measured by the voltage-current sensor attached to the smart tap and extracting a little feature amount indicating features of the voltage and current waveform to specify the device from the feature amount by using comparison data saved in advance in an internal memory of the smart tap.

The data of every period (once/60 seconds) of the power consumption calculated by the microcomputer at 0.5 second intervals is held in the internal memory of the smart tap, and the data is divided into a plurality of packets and transmitted to the server (see Non Patent Literature 1 and 2).

The supply and demand arbitration system is developed based on a notion that the power supply on the basis of available power on the power source side and power consumption on the device side will be more important when not only solar batteries, but also fuel cells and storage batteries are widely used in general households. Therefore, the supply and demand arbitration system includes: an arbitration server; apparatuses of power sources (commercial power sources, solar power apparatuses, fuel cells, and storage batteries) connected to the arbitration server; a memory and a power control apparatus connected to the arbitration server; and a plurality of electric devices connected to the arbitration server through a network.

Each electric device includes a microcomputer that controls the electric device and further has a function of communication with a measurement device, which measures the power consumption of the electric device, and the arbitration server. A data storage area of the memory stores device state table data, power source state table data, priority data, upper limit data, target value data, and the like.

The arbitration server of the supply and demand arbitration system inquires each device and each power source about the state at two to three second intervals counted by a refresh timer and updates a device state table and a power source state table according to responses of the inquiry to manage the state of each device and each power source.

Therefore, the arbitration server updates the device state table and the power source state table at two to three second intervals, and the supply of power cannot be controlled in real time in response to a power request necessary for the user. The amount of data for calculating and processing the power supply and the capacity is enormous, and the load in the computation is large.

When the arbitration server receives a supply request message from an electric device, the arbitration server sets an upper limit of the power consumption and a target value of the power consumption. The upper limit is a total of currently available power of the power sources (hereinafter, the total available power will be called "total power of power sources"), and the setting is calculated with reference to the power source state table stored in the memory. The arbitration serer calculates the power total required by the electric devices in use and determines whether the sum of the request power and the power total is less than the target value of the total power of power sources.

The priority table is a table for determining priorities of the electric devices or supply request messages, and values (0 to 3) indicating the priorities are described in association with message types (request types $T_a$) on the supply request messages. The request types $T_a$ are classified into four (A, B, C, and D). The arbitration server is a power supply control apparatus that controls the supply of power based on the priorities of the electric devices to prevent the power from exceeding the target value of the total power of the power sources.

Meanwhile, a home energy management system (HEMS) that is a management method of electric devices is known. The HEMS is configured to perform automatic control by setting a control rule of an electric device, such as automatic suspension of operation of an air conditioner when the ambient temperature is low, for example. The HEMS is designed to attain power saving by optimizing the method of utilizing the electric devices and is based on the method of using the electric devices. The conventional HEMS focuses on the method of using the electric devices without taking into account the amount of reduction in power due to changes in the use method of the electric devices, and a power reduction rate that can satisfy the power saving request cannot be secured.

The user who uses an electric device that is a home or office electric product usually wants to save the power consumption and the power consumption amount even in a small amount. To attain the object of power saving, the home network preferentially supplies power to electric devices (such as a ceiling light) in which the operation state changes only between On and Off regarding the priorities between the electric devices, to prevent the power consumption and the power consumption amount from exceeding the upper limit. The supply and demand arbitration system preferentially supplies power to electric devices (such as a refrigerator and an air conditioner) with a value 0 or 1 in the request type $T_a$ of electric device regarding the priorities, and the priorities are fixed to the electric devices. However, the status of use of the electric devices by the user changes from moment to moment, and the electric devices cannot be used at necessary timing in some cases when the priorities are fixed.

The arbitration server updates the device state table and the power source state table at two to three second intervals counted by the refresh timer to manage the state of each device and each power source. Therefore, an instantaneous response to a power request necessary for the user, such as a request for operating an air conditioner, is not possible.

Therefore, the supply of power cannot be controlled in real time, and the load is large due to the enormous amount of data to be processed. Furthermore, although the use pattern of power necessary for the user in daily life varies among cases, such as a case with a small children, a case of a two-income married couple, and a case of a single, the arbitration server controls the power without taking into account the use pattern of the power at all, and the QoL of the user is lost.

Consequently, to solve the problems, the present inventors and the like invented an "EoD Control System" and applied the invention as Japanese Patent Application No. 2011-154495 (July 13, 2011) to the Patent Office, in which the user can set two types of limits, "maximum instantaneous power" and "ceiling of accumulated power" in a certain period (such as one day, one week, and one month), for a commercial power source to control the peak reduction in real time, and a dynamic priority control apparatus that can reduce an electric bill and Co2 is included.

The EoD control system handles instantaneous power of an initial target value as an updated initial target value.

The problems are solved by using: initial target value update means for updating the instantaneous power of the initial target value with the maximum instantaneous power to handle the power as an updated initial target value; and power arbitration means for comparing a power consumption total value with the updated initial target value and referring to electric device characteristic class data to determine which one of the characteristics of the electric device characteristic class data the electric device has based on the electric device characteristic class data and selecting a device with a minimum priority according to the characteristic of the electric device based on the result of the determination to perform arbitration based on priorities between electric devices.

Meanwhile, real-time adjustment of the balance of supply and demand of power is important for stable operation of a power network. However, one-way, centralized management for controlling the supply for the power demand has been performed thus far, and maintaining the balance of supply and demand is difficult when there is a rapid increase in demand or reduction in the supply capacity.

Particularly, the implementation of a storage battery system for consumers is recommended recently to handle the tightness of the balance of supply and demand at the peak of demand. The power is stored in storage batteries in a time zone with a small power demand and used in a time zone with a large demand in which a power saving request is generated, and the power saving request can be handled without changing the life style. However, the current management of the storage batteries is schedule management for charging during the night and discharging during the day or simple management of charging when there is spare solar power, and efficient and adaptive charge-discharge management according to power use patterns of individual consumers is not performed. Furthermore, storage batteries with excessive capacity and charge-discharge power are used to handle any power use pattern, and the implementation costs tend to increase.

In addition, when the peak value of the electric power consumption of households and the like is to be reduced only with the simple implementation of the storage batteries without the implementation of the on-demand power control system, the peak value of the electric power consumption cannot be reduced to a satisfactory level without increasing the capacity of the storage batteries. Therefore, the implementation costs of the storage batteries increase with an increase in the capacity of the storage batteries required in this case.

Citation List

Patent Literature

Patent Literature 1: International Publication No. 2008/152798
Patent Literature 2: Japanese Patent Laid-Open No. 2010-193562

Non Patent Literature

Non Patent Literature 1: "i-Energy and Smart Grid," Takekazu Kato and four others, IEICE technical report, pp. 133-138, January 19, 2009
Non Patent Literature 2: "i-Energy and Smart Grid," Professor Takashi Matsuyama, Graduate School, Kyoto University, p. 21, July 29, 2009

Summary of Invention

Technical Problem

An object is to provide a multiple power source management system for an on-demand power control system, a multiple power source management system program for an on-demand power control system, and a computer-readable recording medium recording the program that can perform power management including storage batteries based on the "EoD control system" to control charge-discharge management of the storage batteries adapted to an actual power use request while following a power use plan according to a power use pattern of a user and that can design optimal storage capacity and charge-discharge output for the user in a preliminary charge-discharge plan even with the storage batteries with minimum specifications.

Solution to Problem

The present inventors and the like have completed the present invention as a result of intensive studies for solving the problems.

1. An on-demand multiple power source management system including: a plurality of power sources; a plurality of electric devices; smart taps connected to the electric devices; a multiple power source management apparatus that includes a memory and that controls supply of power to the electric devices; and a network for the multiple power source management apparatus connected through the smart taps, wherein the multiple power source management apparatus includes: power supply plan generation means for setting a power use plan of a commercial power source as initial values of a supply plan of a capacitor, searching a time zone with a maximum dissatisfaction among the time zones of the initial values to set the time zone as a time-shift destination, searching a time zone with a minimum dissatisfaction to set the time zone as a time-shift source, and repeating the process until the dissatisfaction of the time-shift destination is smaller than the dissatisfaction of the time-shift source to generate a power supply plan; and arbitration means for repeating a process of selecting a device with a minimum priority among an electric device that has requested power and electric devices in operation, selecting a power source with a maximum power source load factor, reducing or stopping power of the electric device, and reducing supply power of the power source by an amount of the reduced power until the following Expressions (1) and (2) are satisfied, thereby performing arbitration to satisfy Expressions (1) and (2) at the same time.

$$\forall a \in A, \forall s \in S: \mathrm{Pri}_a\left(\mathrm{PD}_a^{\mathrm{REQ}}\right) \geq \mathrm{LF}_s\left(\mathrm{PS}_s^{\mathrm{REQ}}\right) \qquad (1)$$

$$\sum_{a \in A} PD_a^{REQ} = \sum_{s \in S} PS_s^{RES} \qquad (2)$$

2. The on-demand multiple power source management system according to 1, wherein the plurality of power sources include a combination of a commercial power source as well as a capacitor and at least one power source of a capacitor of an electric vehicle and solar power.

3. The on-demand multiple power source management system according to 2, wherein the generated power supply plan is an optimal capacity of the storage battery.

4. A program causing a computer to operate as a multiple power source management apparatus in an on-demand multiple power source management system, the on-demand multiple power source management system including: a plurality of power sources; a plurality of electric devices; smart taps connected to the electric devices; the multiple power source management apparatus that includes a memory and that controls supply of power to the electric devices; and a network for the multiple power source management apparatus connected through the smart taps, wherein the multiple power source management apparatus executes: a process of setting a power use plan of a commercial power source as initial values of a supply plan of a capacitor, searching a time zone with a maximum dissatisfaction among the time zones of the initial values to set the time zone as a time-shift destination, searching a time zone with a minimum dissatisfaction to set the time zone as a time-shift source, and repeating the process until the dissatisfaction of the time-shift destination is smaller than the dissatisfaction of the time-shift source to generate a power supply plan; and a process of repeating a process of selecting a device with a minimum priority among an electric device that has requested power and electric devices in operation, selecting a power source with a maximum power source load factor, reducing or stopping power of the electric device, and reducing supply power of the power source by an amount of the reduced power until the following Expressions (1) and (2) are satisfied, thereby performing arbitration to satisfy Expressions (1) and (2) at the same time.

$$\forall a \in A, \forall s \in S: \mathrm{Pri}_a\left(\mathrm{PD}_a^{\mathrm{REQ}}\right) \geq \mathrm{LF}_s\left(\mathrm{PS}_s^{\mathrm{REQ}}\right) \qquad (1)$$

$$\sum_{a \in A} PD_a^{REQ} = \sum_{s \in S} PS_s^{RES} \qquad (2)$$

5. A program that is a computer-readable recording medium recording the program according to 4.

Advantageous Effects of Invention

The EoD control system (on-demand multiple power source management system) of the present invention can change the priorities between electric devices according to the electric devices required by the user in daily life and the use state of the electric devices, and a necessary electric device can be used at a necessary timing.

According to the EoD control system of the present invention, the supply of power is controlled based on the power use pattern of the user as well as the maximum instantaneous power and the ceiling set by the user. Therefore, the system can secure the maximum instantaneous power and the ceiling set by the user without losing the quality of life (QoL) of the user using the electric devices. When the user requests power, the system can control the supply of power in real time by changing the priorities according to the power consumption of the electric devices.

The on-demand multiple power source management system of the present invention can perform automatic control to surely satisfy the power reduction request on the supply side. Therefore, the system can secure the power reduction rate on the demand side in response to the request on the supply side without additional labor while using necessary electric devices.

Furthermore, the on-demand multiple power source management system of the present invention is characterized by being a management method of power. Therefore, classification based on a power adjustment method is performed in a classification method of electric devices, and the power saving rate and the peak reduction rate can be secured by implementing power arbitration means for securing the upper limit of the use power. Thus, the use of the on-demand power control system in place of the conventional HEMS can handle the problem of the tightness of the current power supply and demand.

The on-demand multiple power source management system can make a power use plan and a charge-discharge plan according to the power use pattern of the user learned in advance based on the conventional EoD system to realize charge-discharge management for adaptive handling of the actual power use request while following the plans. In a preliminary charge-discharge plan, minimum specifications of the storage battery can be obtained to design optimal storage capacity and charge-discharge output for the user.

Brief Description of Drawings

[Figure 1] Figure 1 is a schematic diagram showing a configuration of a communication network of an EoD control system.

[Figure 2] Figure 2 is a schematic diagram showing a configuration of a power network of the EoD control system of the present invention.

[Figure 3] Figure 3 is an arrangement diagram showing smart tap arrangement positions for installing electric devices.

[Figure 4] Figure 4 is a relationship diagram showing a connection relationship between a socket, a smart tap, and an electric device.

[Figure 5] Figure 5 is a floor plan showing a layout of a model house.

[Figure 6] Figure 6 is a graph showing power consumption of the electric devices.

[Figure 7] Figure 7 is a graph showing power consumption obtained by integrating the power consumption of the electric devices.

[Figure 8] Figure 8 is a functional block diagram showing functions included in a dynamic priority control apparatus.

[Figure 9-1] Figure 9-1 is an explanatory view explaining a method of setting initial plan values from a power use plan.

[Figure 9-2] Figure 9-2 is an explanatory view explaining a method of setting initial plan values from the power use plan.

[Figure 9-3] Figure 9-3 is an explanatory view explaining a method of setting initial plan values from the power use plan.

[Figure 10] Figure 10 is an explanatory view of actual power consumption and a case in which control is performed while the initial target values are maintained.

[Figure 11] Figure 11 is an explanatory view when control of feeding back differences between the actual instantaneous power and the initial target values to subsequent plan values is performed.

[Figure 12] Figure 12 is a diagram showing a satisfaction of a drier with respect to power.

[Figure 13] Figure 13 is a diagram showing a satisfaction of an electric heater with respect to power.

[Figure 14] Figure 14 is a diagram showing a satisfaction of a rice cooker with respect to power.

[Figure 15] Figure 15 is a flow chart explaining a processing procedure by the priority apparatus supplying power based on priorities in response to a power request message.

[Figure 16] Figure 16 is a functional block diagram explaining functions included in a multiple power source management apparatus.

[Figure 17] Figure 17 is a functional block diagram of a second embodiment.

[Figure 18] Figure 18 is a flow chart showing preprocessing of setting a power use plan before operation of the dynamic priority control apparatus.

[Figure 19] Figure 19 is a flow chart showing entire processing of the dynamic priority control apparatus.

[Figure 20] Figure 20 is a flow chart showing a process of power use plan setting.

[Figure 21] Figure 21 is a flow chart showing an initial target value update process.

[Figure 22-1] Figure 22-1 is a flow chart showing a priority arbitration process.

[Figure 22-2] Figure 22-2 is a flow chart showing the priority arbitration process.

[Figure 22-3] Figure 22-3 is a flow chart showing the priority arbitration process.

[Figure 22-4] Figure 22-4 is a flow chart showing the priority arbitration process.

[Figure 23-1] Figure 23-1 is a flow chart showing a process of constant monitoring.

[Figure 23-2] Figure 23-2 is a flow chart showing the process of constant monitoring.

[Figure 23-3] Figure 23-3 is a flow chart showing the process of constant monitoring.

[Figure 24] Figure 24 is a diagram showing a time shift of power consumption by a storage battery.

[Figure 25] Figure 25 is a diagram showing a power source load factor.

[Figure 26] Figure 26 illustrates a power source and appliance arbitration algorithm.

[Figure 27] Figure 27 is a diagram showing appliances used in an experiment and controllability of the appliances.

[Figure 28] Figure 28 is a diagram showing predicted demand and power use plans of a couple and a single.

[Figure 29] Figure 29 is a diagram showing peak values of charge-discharge plans of the storage battery of a couple and a single.

[Figure 30] Figure 30 is a diagram showing storage plans of the storage battery of a couple and a single.

[Figure 31] Figure 31 is a diagram showing an arbitration result of instantaneous power and accumulated power of the present invention (for a couple).

[Figure 32] Figure 32 is a diagram showing a conventional arbitration result of the instantaneous power and the accumulated power (for a couple).

[Figure 33] Figure 33 is a diagram showing a dissatisfaction with respect to maximum instantaneous power (for a couple).

[Figure 34] Figure 34 is a diagram showing an arbitration result of the instantaneous power and the accumulated power in a conventional method (for a couple).

[Figure 35] Figure 35 is a diagram showing an arbitration result of the instantaneous power and the accumulated power of the present invention (for a single).

[Figure 36] Figure 36 is a diagram showing a conventional arbitration result of the instantaneous power and the accumulated power (for a single).

[Figure 37] Figure 37 is a diagram showing changes in the maximum instantaneous power and the dissatisfaction of a commercial power source (for a single).

[Figure 38] Figure 38 is a diagram showing a transition of the instantaneous power in Comparative Example 1, in which the maximum instantaneous power is 700 W, and a storage battery with a capacity of 1812 Wh is used.

[Figure 39] Figure 39 is a diagram showing a transition of the charge amount of the storage battery in Comparative Example 1.

[Figure 40] Figure 40 is a diagram showing the maximum instantaneous power when a storage battery with a capacity of 411.2 Wh is used in Comparative Example 2.

[Figure 41] Figure 41 is a diagram showing a transition of the charge amount of the storage battery in Comparative Example 2.

[Figure 42] Figure 42 is a diagram showing a relationship between the capacity of the storage battery and the maximum instantaneous power.

Description of Embodiments

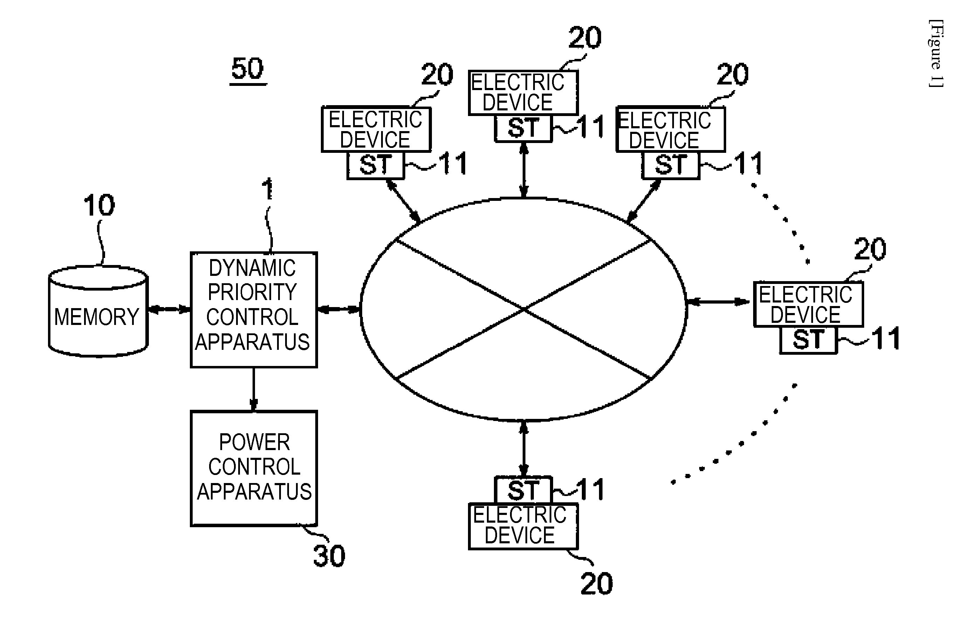

A configuration of a communication network of an EoD control system of the present invention will be described with reference to Figure 1.

Figure 1 is a schematic diagram showing a configuration of a communication network of the EoD control system of the present invention. An EoD control system 50 of the present invention is installed in an office and a household and includes a dynamic priority control apparatus 1 (hereinafter, also simply called "priority apparatus"), smart taps 11, electric devices 20 (hereinafter, also simply called "devices") that are home or office electric products, and a power control apparatus 30. The priority apparatus is connected to the smart taps 11 (hereinafter, called "STs") through a Local Area Network (hereinafter, called "LAN"), through a wired or wireless LAN. The LAN is an example of the present invention, and the present invention is not limited to this. The present invention may be connected to the STs through a network such as WiFi, PLC, ZigBee, and specified low power radio station. The priority apparatus is connected to the STs through power sockets of the devices. Therefore, the STs can communicate with the priority apparatus through the LAN.

The EoD control system of the present invention does not unconditionally supply power when a switch of a device is turned on to request power. A message for requesting power is first transmitted to the priority apparatus, and the availability of power supply and available power are determined for each device through arbitration of the available power, priorities of devices, and the like based on a power use pattern of the user on the priority apparatus. The devices use only permitted power, and the power consumption amount and the power consumption do not exceed target values. The system can save power by reducing the power consumption amount and avoid a massive blackout at the peak.

The priority apparatus is a general-purpose server and includes a CPU. The priority apparatus is provided with an internal memory 10 (hereinafter, simply called "memory") which is a semiconductor storage device, such as a hard disk and a RAM, that allows direct reading and writing.

The power from a commercial power source is supplied to the priority apparatus and each device 20 through the power control apparatus 30.

Although the installation location of the EoD control system 50 of the present invention is a general household in the description, the installation location is not limited to this, and any location, such as an office, that allows installation of the STs is possible. Although the type of the STs of the EoD control system of the present invention is an external type connected to power sockets, the type is not limited to this, and the type may be a built-in type embedded in power sockets.

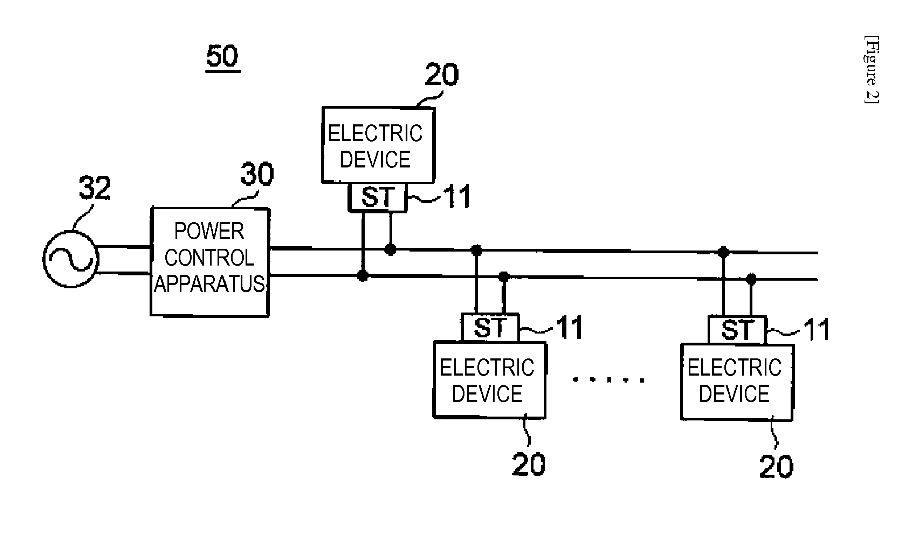

Figure 2 is a schematic diagram showing a configuration of a power system network of the EoD control system 50 shown in Figure 1.

As described with reference to Figure 1, the EoD control system 50 includes the power control apparatus 30, and the power source is connected to the power control apparatus 30. The power source here is a power source including a so-called commercial power source and other power sources such as individual power sources with electricity separately charged in storage batteries from a commercial power source or the like.

The power control apparatus 30 is provided with, for example, a plurality of breakers (not shown) including one main breaker and a plurality of sub breakers. The power (AC voltage) from the power source is provided to a primary side of the main breaker and distributed to the plurality of sub breakers from a secondary side of the main breaker. However, the power source is connected to the primary side of the main breaker through a switch (not shown) for supplying/stopping the commercial current. The switch is turned on/off according to a switching signal of the priority apparatus.

The priority apparatus and the plurality of devices 20 are connected to an output side of the power control apparatus 30, that is, secondary sides of the sub breakers. Although not shown, an insertion plug provided on the priority apparatus is inserted to a wall socket or the like to connect the priority apparatus to allow receiving power from the power control apparatus 30. The plurality of devices include input sockets that are insertion plugs and output sockets, and the power of the power source is transmitted from the input sockets. The plurality of devices are connected to allow receiving power through the sockets of the plurality of devices connected to the output sockets.

As described, the EoD control system of the present invention includes not only the power network shown in Figure 2, but also the communication network shown in Figure 1.

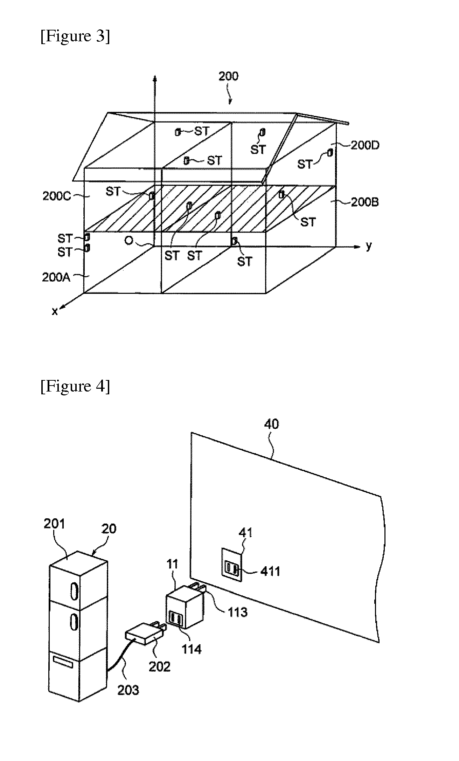

Figure 3 is a diagram explaining arrangement positions of the devices based on the STs connected to the sockets in the household.

In Figure 3, a house 200 includes, for example, a living room 200A, a room 200B, a room 200C, and a room 200D. The living room 200A and the room 200B are arranged on the first floor, and the room 200C and the room 200D are arranged on the second floor. As shown in Figure 3, the STs are connected to sockets installed on walls. For example, five STs are connected to the sockets installed on the walls of the living room 200A, two STs are connected to the sockets installed on the walls of the room 200B, two STs are connected to the sockets installed on the walls of the room 200C, and two STs are connected to the sockets installed on the walls of the room 200D. In this way, all devices are connected to the power source through the STs.

Figure 4 is a diagram explaining a connection relationship between the socket connected to the power source and arranged on the wall, the smart tap 11, and the device. In Figure 4, a refrigerator 201 that is a device includes: a socket 202 including an insertion plug; and wiring 203. The socket 202 of the refrigerator 201 is attached to and removed from an output socket 114 of the ST 11. A socket 41 is arranged on a wall 40, and commercial power is supplied to an insertion port 411 of the socket 41 through a power system in the household. An input socket 113 that is an insertion plug is attached to and removed from the insertion port 411.

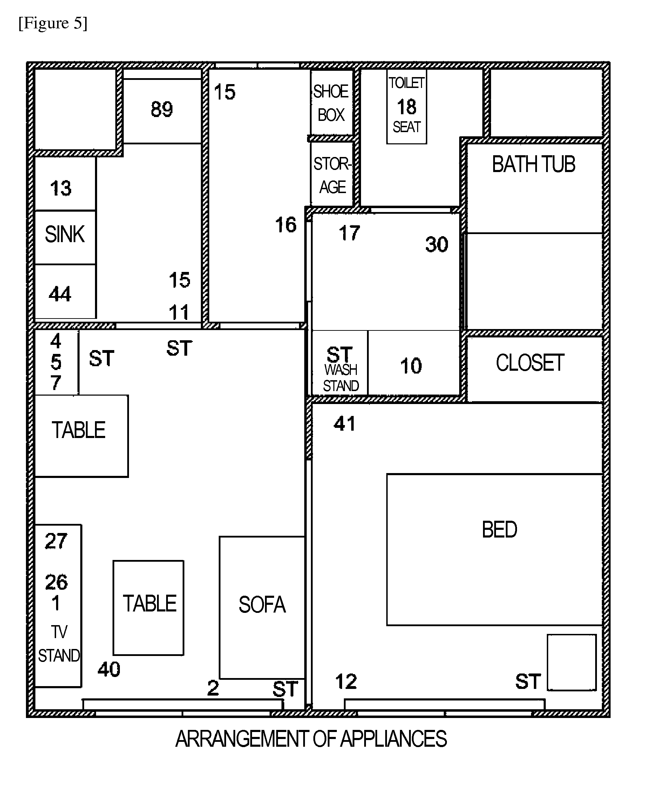

Figure 5 is a floor plan showing a layout of a model house used in an example and a demonstration test of information processing of dynamic priorities described later.

The model house is a type including one bed room, a living room, and a dining room with a kitchen. The numbers described in Figure 5 indicate names of devices shown in Table 1 and locations where the switches of the devices are installed. STs described in Figure 5 indicate locations where the smart taps 11 are arranged. Five STs are arranged.

[Table 1]

| id | name | id | name | id | name |
|----|------|----|------|----|------|
| 1 | TV | 12 | Bed room light | 30 | Bathroom light and fan |
| 2 | Air conditioner | 13 | Kitchen light | 40 | Electric carpet |
| 4 | Pot | 15 | Corridor light | 41 | Heater |
| 5 | Coffee maker | 16 | Lavatory light | 42 | Router |

(continued)

| id | name | id | name | id | name |
|---|---|---|---|---|---|
| 6 | Night stand | 17 | Toilet light and fan | 43 | Video cassette recorder |
| 7 | Rice cooker | 18 | Warm water flushing toilet | 44 | Electromagnetic cooker |
| 8 | Refrigerator | 20 | Air cleaner | 45 | Mobile phone charger |
| 9 | Microwave oven | 21 | Vacuum cleaner | 48 | PC |
| 10 | Washing machine | 22 | Drier | | |
| 11 | Living room light | 23 | Electric toothbrush charger | | |

As described, the ST includes a voltage-current sensor, a semiconductor relay, a ZigBee module, and a microcomputer that controls the entire components and that executes internal processing. The microcomputer calculates the power consumption from a current and voltage waveform measured by the voltage-current sensor and specifies the device from a little feature amount indicating features of the voltage and current waveform. The data received by the EoD control system of the present invention includes two data: power consumption that is obtained by the ST holding the power consumption calculated at 0.5 second intervals by the microcomputer as data of each period (once/60 seconds) in the internal memory of the smart tap and that is divided into a plurality of packets and transmitted to the server; and a power request message transmitted from the ST when each device 20 requests power.

Although not shown, the priority apparatus includes a memory with a program storage area and a data storage area. The program storage area stores programs, such as a communication processing program, a power use plan setting program, an initial target value update program, and a priority arbitration program. The data storage area stores device characteristic class data, message data, and the like.

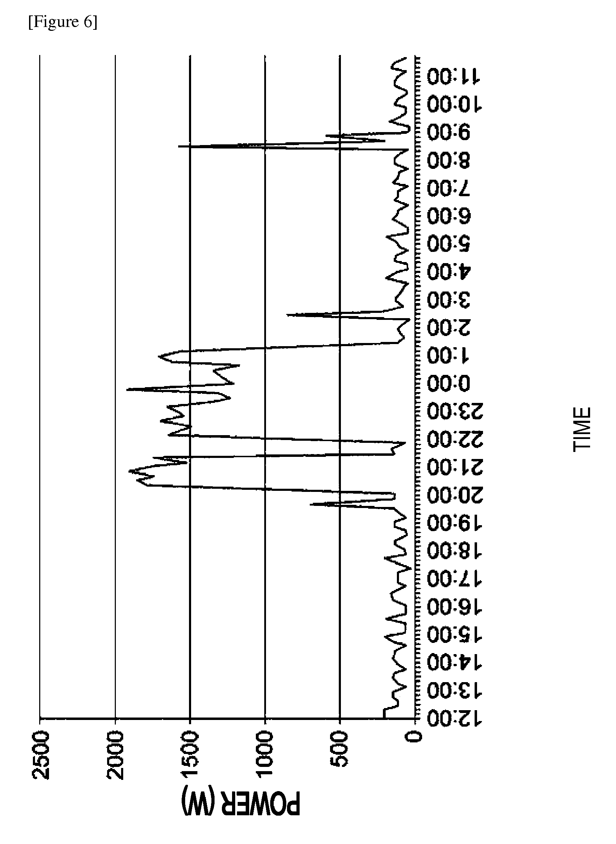

Figure 6 is a diagram showing a graph of power consumption of the devices in a house.

In Figure 6, the vertical axis indicates power (W), and the horizontal axis indicates time. The graph indicates power consumption at 10 minute intervals in a day. Although the power has been called power consumption so far, a defined term "instantaneous power" will be used below because the meaning is different from general "power consumption". The instantaneous power denotes power consumption obtained by averaging total values of the power consumption added at intervals of minimum control intervals $\tau$ (five to ten minutes).

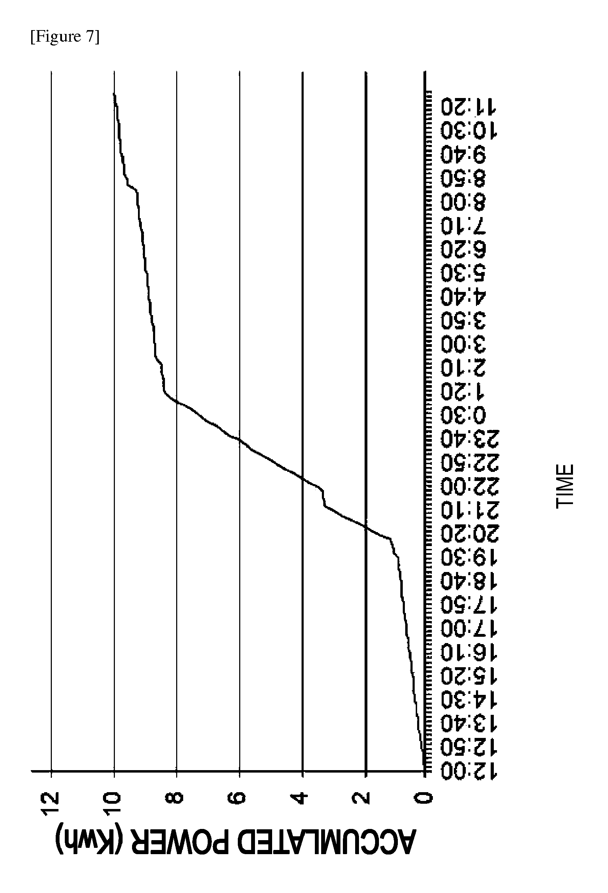

It can be recognized from the graph that the power is not used during the day, and the power is used from 8 p.m. to 1 a.m. during which the value of the instantaneous power is high at 1900 W. In Figure 7, the vertical axis indicates power consumption amount (kWh), and the horizontal axis indicates time. The graph indicates a power consumption amount that is an accumulated amount of the instantaneous power at 10 minute intervals in one day, and the value is 10.0 kWh.

The power consumption amount of a household in Japan is 300 kWh per month and about 10.0 kWh per day, and the power consumption amount of Figure 7 is the same as that of a household per month. Although the accumulated amount of power has been called power consumption amount so far, the meaning of the power consumption amount is different from the normal meaning because the meaning of the instantaneous power is different from the general power consumption. A defined term "accumulated power" will be used below.

By the way, upper limits of usable power can include an upper limit of the accumulated power in a certain period (hereinafter, called "ceiling") and an upper limit of the instantaneous power (hereinafter, called "maximum instantaneous power"). The maximum instantaneous power is provided as an upper limit of the instantaneous power of the power in each time zone to reduce the contract power of the user or to respond to a peak reduction request from a power company to maintain the balance of supply and demand of the power network. The ceiling is provided as an upper limit of the accumulated power used in a certain period (such as one day, one week, and one month) to reduce the electric bill or the $CO_2$ emission of the user.

There are various power use patterns indicating the amount of power used by the user in each time zone. Therefore, the amount of power that can be used at each hour to satisfy the upper limits of the instantaneous power and the accumulated power needs to be set as a power use plan from a predicted power use pattern. In this case, the power use pattern of the user can be predicted to set the power use plan by taking the upper limits into account, and the upper limits can be satisfied while maintaining the QoL. Therefore, the power use pattern obtained by predicting the power use pattern of the user and setting the upper limits of the instantaneous value from the pattern and the integrated value will be defined as a "power use plan" and used below.

The power use plan will be described with a specific example. The graphs of Figures 6 and 7 can be estimated to be graphs of a life pattern of a single household, not a life pattern of a household with a married couple and children for example, because the value of the instantaneous power is high at 1900 W in a time period from 8 p.m. to 1 a.m. as shown in the graph of Figure 6.

In this way, the graph indicated by the instantaneous power of all devices in the household makes a transition in a certain power use pattern. The power required by the user in daily life has a unique use pattern, and the QoL can be guaranteed by maintaining the pattern. For example, assuming that the user living in the power use pattern indicated by the graphs of Figures 6 and 7 has made a contract with the power company for 20 A, the breaker trips if the user uses various devices over 2 kW even temporarily, and the electric bill increases with an increase in the power consumption amount of 10.0 kW per day. When the user makes a plan for reducing the upper limits of the instantaneous value and the integrated value by, for example, 10% to avoid this, the plan set by reducing the instantaneous power and the accumulated power by 10% based on the power use pattern is the "power use plan". The ceiling in the power use plan is 9.0 kWh, and the maximum instantaneous power is 1.8 kW.

As described, the upper limits of power include the ceiling in a certain period (upper limit of accumulated power) and the maximum instantaneous power at each timing (upper limit of instantaneous power). As various power use patterns can be considered for each user, the amount of power that can be used at each hour needs to be set as a power use plan to satisfy the upper limits. In this case, the power use pattern of the user can be predicted to set the power use plan based on the pattern by taking the upper limits into account, and the upper limits can be satisfied while maintaining the QoL. The power use plan sets the use power of each certain interval $\tau$ (ten minutes in the experiment), and this minimum control interval $\tau$ will be described.

For example, the upper limit of the power consumption amount is set to 72 kWh in three days, which is 24 kWh per day, 12 kWh per 12 hours, and 1 kWh per hour. The initial target value of the power consumption amount is calculated in multiple stages based on the divided times, and the length used for the control depends on the fineness of the control.

It can be recognized from the result obtained by a demonstration test in relation to the upper limit of the power consumption amount and the time interval of $\tau$ that five to ten minute intervals are preferable for the time intervals. The time interval of $\tau$ will be called a minimum control interval $\tau$, and the user can arbitrarily set the interval within five to ten minute intervals.

If the minimum control interval $\tau$ exceeds ten minutes, there are devices that cannot be used when various devices are to be used, because the interval is long. The QoL is significantly impaired, and more than ten minutes is not preferable.

If the minimum control interval $\tau$ is less than five minutes, the supply power is changed according to the situation changed from moment to moment. Therefore, there can be a situation with unstable supply of power, such as, for example, a situation in which a light bulb flickers because the brightness always changes. Thus, less than five minutes is not preferable.

Calculating and processing the power consumption amount of all devices from the power consumption is difficult because the amount of data is enormous.

(First Embodiment)

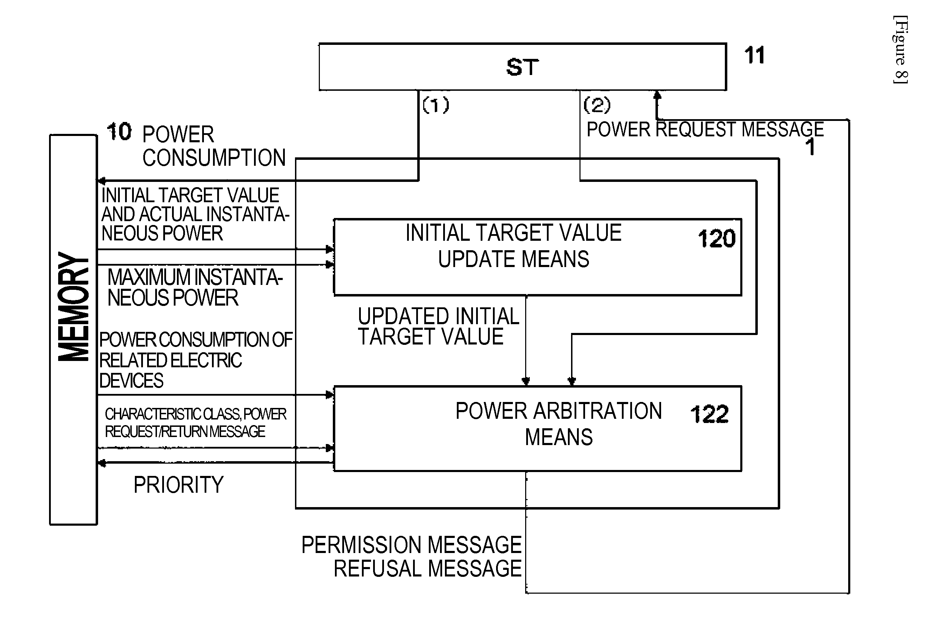

Figure 8 is a functional block diagram of a first embodiment showing functions included in the priority apparatus shown in Figure 1.

Reference sign 1 of Figure 8 denotes a priority apparatus, reference sign 10 denotes a memory of the priority apparatus, reference sign 11 denotes an ST, and the priority apparatus includes initial target value update means 120 and power arbitration means 122. Reference sign (1) denotes power consumption transmitted from the ST. Before the operation of the priority apparatus, the priority apparatus executes preprocessing to convert the power consumption to a power use plan for setting the use power at each minimum control interval $\tau$ and stores the power use plan, the instantaneous power of the initial target value, and the maximum instantaneous power in the memory 10. Reference sign (2) denotes a power request message transmitted from the ST, and the power request message is transmitted to the power arbitration means 122.

The initial target value update means 120 has a function of allocating a difference between the instantaneous power of the initial target value and the actual instantaneous power to the instantaneous power of a subsequent initial target value to set an updated initial target value and preventing the value from exceeding the maximum instantaneous power. The power arbitration means 122 has a function of comparing the updated initial target value and the total value of the power consumption of the device that has transmitted the power request message and the power consumption of the devices in operation, and if the total value is large, selecting a device with a minimum value in the priorities of devices obtained based on electric device characteristic class data described later to select the device according to the characteristics of the device.

(Preprocessing)

An example of a process executed in advance before the activation of the priority apparatus includes a process of setting the power use plan. The setting process of the power use plan will be described below.

The priority apparatus stores, in the memory, the power consumption transmitted from the ST and calculated at 0.5 second intervals and stores, in the memory, the instantaneous power obtained by averaging the total values of the sums of the power consumption at intervals of the minimum control intervals $\tau$ (five to ten minutes). A past power use history of the user, such as instantaneous power and accumulated power of one week, one month, or each of four seasons, spring, summer, autumn, and winter, is set as a power use plan and stored in the memory.

The EoD control system of the present invention uses in advance the power use pattern that is the past power use history of the user, makes a power use plan with a target value set by the user, such as a target value of reducing 30%, and determines the ceiling and the maximum instantaneous power to control the power.

The EoD control system of the present invention uses the ceiling and the maximum instantaneous power to perform the actual control. Therefore, the priority apparatus of the present invention uses in advance the instantaneous power of each time zone based on the past power use history of the user to set the power use plan, and the power use plan can be set in more detail.

The use power of each device is always transmitted to the priority apparatus, and the priority apparatus accumulates this in the memory.

An example of the power use plan will be described below. The power use plan is set by using the instantaneous power at each minimum control interval $\tau$ (ten minutes in the demonstration test described later). The ceiling (upper limit accumulated power) set by the user is defined as C(Wh), the maximum instantaneous power (upper limit of instantaneous power) is defined as M(t)(W), and a power demand predicted value at time t is defined as D(t)(W). An initial target value $T_0$(t)(W) is created from Expressions (3) and (4)

$$D'(t) = \begin{cases} D(t) & if\ D(t) \leq M \\ M(t) & otherwise \end{cases} \qquad (3)$$

$$T_0(t) = \frac{C}{\sum\limits_{t_{start}}^{t_{end}} \tau\, D'(t)} D'(t) \qquad (4)$$

The priority apparatus targets the power of the initial target value $T_0$(t)(W) according to the power use plan and controls the devices so that the power falls below the maximum instantaneous power.

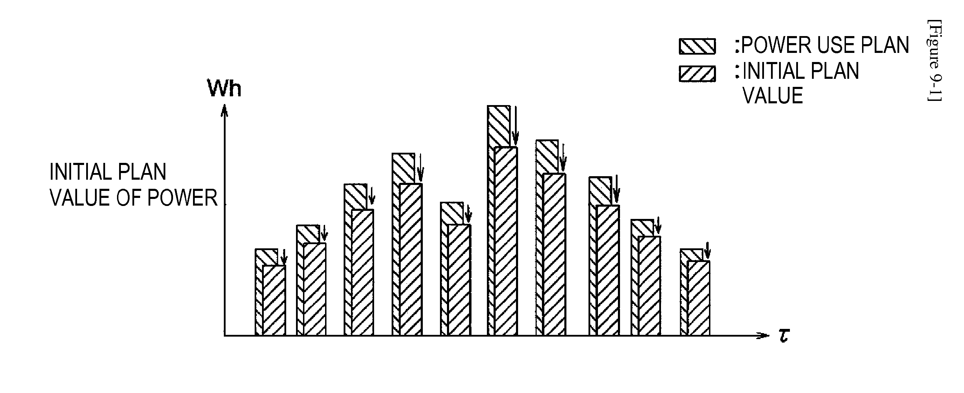

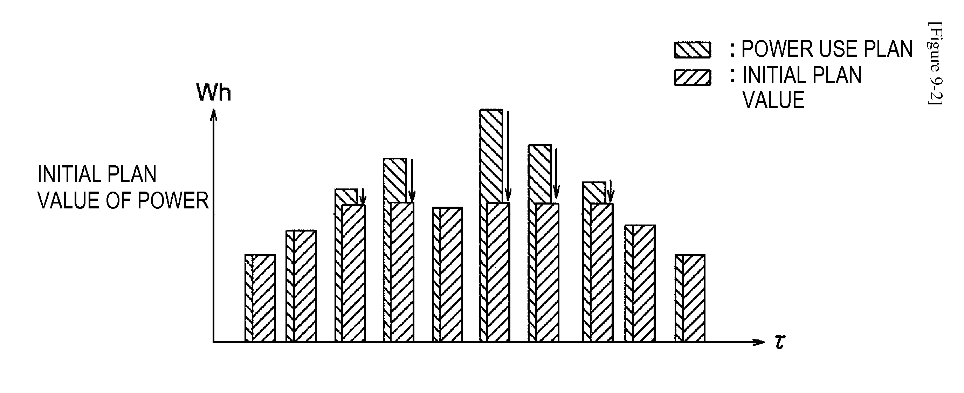

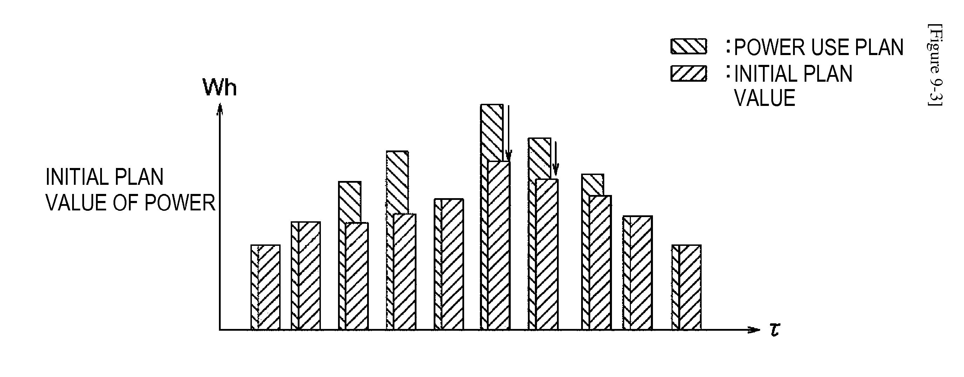

The initial target value $T_0$(t)(W) as an example of the power use plan is a plan for reducing a certain proportion of the power use plan at each time to set the initial target values to satisfy the upper limit as a whole (hereinafter, called "certain proportion reduction plan"). Figure 9-1 shows an example of this. This is an example for setting the initial target values, and in addition, only the power use peak exceeding the instantaneous power of the power use plan of one day is reduced (hereinafter, called "peak reduction plan") (Figure 9-2). There is also an example of reducing power according to the power cost (hereinafter, called "cost reduction plan") (Figure 9-3).

The cost reduction plan is adopted, and when, for example, the power use in a time period from 1 p.m. to 4 p.m. with the greatest power use is reduced, the power consumption can be reduced by lowering the power cost of the power consumption in the time zone with the highest power cost. These reduction plans can set initial target values, and these reduction plans can be combined and set. The priority apparatus can select and set a power use plan based on a reduction method necessary for the user.

As described, in the process executed in advance before the activation of the priority apparatus, the power use plan needs to be set based on the past power use history of the user, and the maximum instantaneous power and the ceiling that are initial target values reduced by the reduction plan selected by the user need to be stored in the memory. Once the priority apparatus is activated, the initial target value update means 120 described below targets the initial target value to execute a process (interval) of checking the power consumption every certain time ($\tau$) and updating the initial target value, and the power arbitration means 122 further executes a process (event driven) of arbitration with other devices according to a request from a device. These means will be described below. Note that the power consumption of each device is always transmitted to the priority apparatus, and the data is accumulated.

(1) Initial Target Value Update Means

The initial target value update means 120 that executes the process (interval) of updating the initial target value at each minimum control interval (τ) based on the initial target value (instantaneous power) will be described.

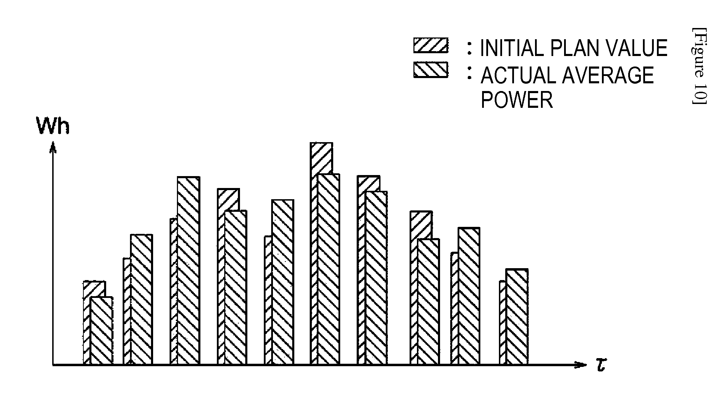

When the priority apparatus is activated to perform the actual control of power, the initial target value of power per τ is targeted to perform the control. However, when there is an action not in the past records, the power cannot be reduced by any means in some cases considering the QoL and the characteristics of devices, and in this case, the actual instantaneous power temporarily exceeds the initial target value. Conversely, the actual instantaneous power may be below the initial target value with a small number of devices used. The devices are obviously used by humans, and the actual instantaneous power also changes depending on the actions at the time. In such a case, the upper limit cannot be ultimately satisfied when the control is continued while the initial target value is maintained. Figure 10 is a bar graph showing an example of the actual instantaneous power after the control while the values of the initial target values are maintained.

Even if the control is to be performed while the initial target value is maintained, the power may not be reduced below the initial target value considering the use status of the device by the user, such as when only a device like an artificial respirator that cannot be stopped exceeds the initial target value at a certain moment. In such a case, the power can temporarily exceed the initial target value within a range not exceeding the maximum instantaneous power, and a subsequent power use plan absorbs the excess in this case to update the initial target value. In this way, although the power is out of the originally set initial target value, the ceiling can be satisfied by feeding back the difference between the actual instantaneous power and the initial target value to the subsequent initial target value while maintaining the QoL.

A distribution function for feeding back to the initial target value will be defined. This is for newly calculating the instantaneous power of the initial target value by inputting the difference between the initial target value and the actual instantaneous power and distributing the difference to the initial target value at a time after the time at which the difference is generated.

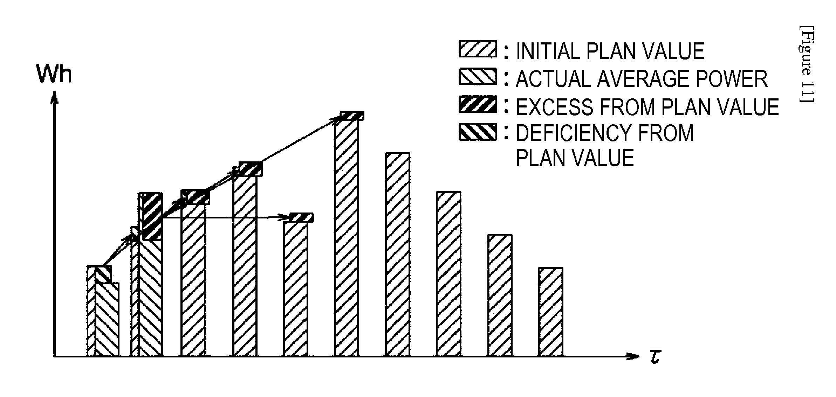

Figure 11 is an explanatory view when the control of feeding back the difference between the actual instantaneous power and the initial target value to the subsequent plan values is performed. At time $t_{noW}$ in which control start time satisfies $t_{noW}$ - $t_{start} \geq i\tau$ after activation of the priority apparatus, the priority apparatus updates the power use plan.

Assuming that i:=i+1, a power use plan $T_i(t)$ indicates a power use plan after updates of i times, that is, at time t after a lapse of iτ. In Expression (5), γ is a distribution function for updating the power use plan, and the different between the instantaneous power of the initial target value and the actual instantaneous power is distributed to subsequent instantaneous power. Therefore, the difference is input to Expression (5) to determine the power of the difference to be distributed to subsequent instantaneous power.

$$T_{i+1} := min(\gamma \ (\hat{T}_i(t_{noW}) - (\hat{E}(t_{noW}), t_{noW} - t_{start})T_i(t), M) \qquad (5)$$

$$\hat{E}(t_{noW}) = \sum_{t_{start}}^{t_{noW}} \tau \ E_{total}(t) \qquad (6)$$

$$\hat{T}_i(t_{noW}) = \sum_{t_{start}}^{i \ \tau} T_i(t) \qquad (7)$$

In Expression (5), $T_1(t_{noW})$ is a current initial plan value, and $E(t_{noW})$ is current use power.

In the graph shown in Figure 11, a method of uniformly distributing the difference to all of the subsequent new initial target values (hereinafter, called "uniform distribution method of difference") is performed. In another method, the difference can be distributed only to the immediately following instantaneous power (hereinafter, called "instantaneous power distribution method"). In this way, the method of distributing the difference includes the method of uniform distribution of difference and instantaneous power distribution. When the entire power use plan is first created to perform the actual control, the initial target values can be updated again according to the status of use within a range not exceeding the maximum instantaneous power, and the ceiling can be satisfied while performing flexible control.

(2) Power Arbitration Means

The power arbitration means 122 for providing priorities between devices to execute the process (event driven) of arbitration with other devices according to a request from a device while maintaining the QoL will be described. A power request from a device is generated at a timing that the user wants to use the device, and the request is made independently of $\tau$ described above. Although some requests can be held for five to ten minutes of the minimum control interval $\tau$, other requests immediately require power. For such a device, the power is not supplied in time when the control is performed at each $\tau$, and the QoL is reduced. Therefore, the power used to execute the arbitration process with other devices in response to a power request of a device is not the instantaneous power, but the actual power consumption. In this way, the power requests generated at various timings can be immediately handled, and whether to shift the time can be immediately determined.

The EoD control system needs indicators for determining to which devices the power will be supplied when individual devices request power. To satisfy the upper limit, not all devices can receive desired power, and necessary devices vary depending on the devices and the situation of the user. Therefore, there is a problem of determining to which devices the power will be preferentially supplied. Thus, the priorities need to be set according to the characteristics of the devices and the situation. Therefore, functions of priority with values of 0 to 1 are set for the devices, and the power is preferentially supplied to devices with large values of priority. The QoL is satisfied by using the devices after the supply of power. Therefore, the cost reduction and the social contribution through energy saving are not taken into account.

To select the devices from which the power will be reduced in response to the power requests from the devices, the characteristics of the devices need to be recognized in advance because the method of controlling the power varies between devices. A parameter indicating the characteristics of the power requested by each device and the power control method will be called QoEn. In QoEn, the devices are classified based on the following power control method of devices.

(1) Adjustable devices (whether power supplied during operation can be changed) (Set of devices belonging to this will be called $A_{adj}$.)
(2) Time-shiftable devices (whether the supply of power can be held at activation) (Set of devices belonging to this will be called $A_{Wait}$.)
(3) Interruptible devices (whether the supply of power can be temporarily suspended during operation) (Set of devices belonging to this will be called $A_{sus}$).

The devices are combined by the three types of power control method, and the devices are classified into eight types of classes as shown in Table 2. The data classified into eight types of classes will be defined and used as "electric device characteristic class data". The electric device characteristic class data is used to control the priorities between devices.

The eight types of classes are associated with the device names indicated by identification ID shown in the fields of appliances to determine the devices to be prioritized by using the priorities of the devices in use. For example, when the priority apparatus receives a power request message from an ST, the priority apparatus uses the priorities of devices and the electric device characteristic class data among the device that has transmitted the message and the devices in operation to determine whether to permit or refuse the message.

The devices classified into (1) adjustable devices are devices that can use the functions of the devices even if the supplied power is reduced in some degree when the devices are used, and examples of the devices include a drier and a light bulb. When devices of (2) request power, there is no problem in terms of functions of the devices without immediate supply of power if the power is to be supplied before a certain time, and examples of the devices include a rice cooker and a washing machine. Even if the power supply is interrupted when devices of (3) are used, the interruption only slightly affects the life of the user using the devices, and examples of the devices include an air conditioner and a refrigerator.

Devices, such as an artificial respirator, for securing safe and comfortable life are classified into class 8. The devices classified into the eight types of classes are not fixed to the classes shown in Table 2. The user can arbitrarily determine the classes of the devices. For example, if a bedridden elderly selects an air conditioner as a device that is always necessary, the air conditioner is classified into class 8. In other words, the electric devices that cannot be classified into the adjustable, interruptible, and time-shiftable classes include a security and monitoring device such as a gas detector, a medical device such as an artificial respirator, and a network device such as a router.

[Table 2]

| Class | Adjustable | Time-shiftable | Interruptible | Device identification ID |
|---|---|---|---|---|
| 1 | YES | YES | YES | PC • water heater |
| 2 | YES | YES | NO | Warm water flushing toilet • microwave oven |
| 3 | YES | NO | YES | Heater • air conditioner • refrigerator |
| 4 | YES | NO | NO | TV • drier |
| 5 | NO | YES | YES | Dish washer • washing machine |
| 6 | NO | YES | NO | Rice cooker • toaster |
| 7 | NO | NO | YES | Copy machine • water heater pot |
| 8 | NO | NO | NO | Gas detector • artificial respirator • network device for router |

1. Adjustable Devices

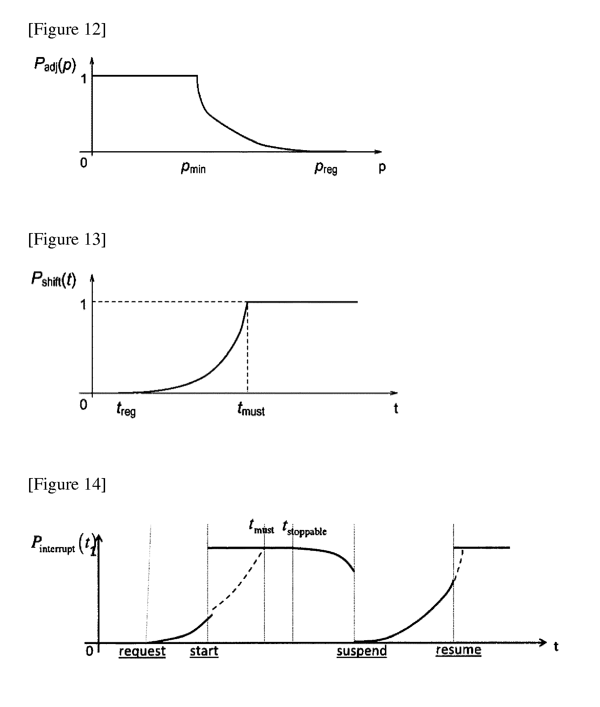

An example of the power-adjustable devices includes a drier. In the power-adjustable devices, the satisfaction of the user is the highest when the requested power is supplied, and the satisfaction does not significantly change even if the supply power is reduced in some degree as shown in Figure 12. However, the capacity of the device is limited when the power is significantly reduced, and the satisfaction of the user is reduced. Ultimately, when the power is below a certain level, the function of the device cannot be fulfilled. Therefore, the priority for the minimum required power is high, and the priority for supplying power as requested is low. The priorities for the supply power can be provided by such a monotonically decreasing function. The power arbitration means defines priorities $\text{Pri}_a^{\text{adj}}(p)$ of the power-adjustable devices as in the following expression, wherein $p^{\text{req}}_a$ denotes request power of a device a, and $p^{\text{min}}_a$ denotes minimum required power.

$$\text{Pri}_a^{\text{adj}}(p) = \begin{cases} 0 & if\ p_a^{\text{req}} \leq p \\ 1 - \left(\frac{p_a^{\text{req}}-p}{p_a^{\text{req}}-p_a^{\text{min}}}\right)^{\alpha_a^{\text{adj}}} & if\ p_a^{\text{min}}p < p_a^{\text{req}} \\ 1 & if\ p \leq p_a^{\text{min}} \end{cases} \qquad (8)$$

An example of the priorities (adjust) for the power-adjustable devices designed in this way is illustrated in Figure 12 and Expression (8).

2. Time-Shiftable Devices

An example of the time-shiftable devices at activation includes a rice cooker. These are devices for which the activation time can be delayed as long as the operation of the devices is completed before designated time. Therefore, as shown in Figure 13, the priority is low just after the request of power, and the priority increases with a decrease in the time before the device must be activated. The devices can be defined in this way.

Priorities $\text{Pri}^{\text{shift}}_a(t)$ of the time-shiftable devices a are defined as in the following expression, wherein $t^{\text{req}}_a$ denotes request time, and $t^{\text{must}}_a$ denotes time that the device must be activated.

$$\text{Pri}_a^{\text{shift}}(t) = \begin{cases} 1 - \left(\frac{t-t_a^{\text{req}}}{t_a^{\text{must}}-t_a^{\text{req}}}\right)a_a^{\text{shift}} & if\ t \leq t_a^{\text{must}}, \\ 1 & if\ t > t_a^{\text{must}} \end{cases} \qquad (9)$$

3. Interruptible Devices

An example of the interruptible devices includes an air conditioner. The interruptible device is a device that runs toward a steady state during operation as in the temperature setting of the air conditioner and that can maintain the steady state once the device reaches the steady state even if the operation is suspended. For such a device, as shown in Figure 14, a high priority needs to be provided to run toward the steady state just after the start of the operation, and the priority can be reduced when the device reaches the steady state because the steady state is maintained even after an interruption. After the interruption, the device gets out of the steady state with time, and the priority needs to be raised to restart the device. Priorities $\mathrm{Pri}^{\mathrm{int}}_a(t)$ of the interruptible devices can be defined and divided into a case in which a is in operation and a case in which a is suspended as in the following expressions.

$$\mathrm{Pri}^{\mathrm{int}}_a(t) = \begin{cases} \mathrm{Pri}^{\mathrm{run}}_a(t) & a \text{ in operation} \\ \\ \mathrm{Pri}^{\mathrm{sus}}_a(t) & a \text{ suspended} \end{cases} \tag{10}$$

$$\mathrm{Pri}^{\mathrm{run}}_a(t) = \begin{cases} \left(\dfrac{t - t^{\mathrm{enable}}_a}{t^{\mathrm{stop}}_a - t^{\mathrm{enable}}_a}\right)^{\alpha^{\mathrm{run}}_a} & \text{if } t \le t^{\mathrm{enable}}_a \\ & \text{otherwise} \\ 1 \end{cases} \tag{11}$$

$$\mathrm{Pri}^{\mathrm{sus}}_a(t) = \begin{cases} \left(\dfrac{t - t^{\mathrm{sus}}_a}{t^{\mathrm{must}}_a - t^{\mathrm{sus}}_a}\right)^{a^{\mathrm{sus}}_a} & \text{if } t \le t^{\mathrm{must}}_a \\ & \text{otherwise} \\ 1 \end{cases} \tag{12}$$

4. Priorities of General Devices

The classes of general devices are defined by combinations of three characteristics shown in Table 2. Priority functions of the classes are defined as shown in the items of Table 3 based on combinations of the priorities defined for the characteristics. For example, the priority function of class 1 is defined as in the following expression based on the product of the priority functions corresponding to the characteristics.

$$\mathrm{Pri}_a(t, p) = \mathrm{Pri}^{\mathrm{adj}}_a(p)\, \mathrm{Pri}^{\mathrm{shift}}_a(t) \mathrm{Pri}^{\mathrm{int}}_a(t) \tag{13}$$

The priority function of class 8 is 1, which means that the power is always preferentially supplied.

[Table 3]

| Class | Priority Function $\mathrm{Pri}_a(p,t)$ |
|---|---|
| 1 | $\mathrm{Pri}^{\mathrm{adj}}_a(p) \cdot \mathrm{Pri}^{\mathrm{shift}}_a(t) \cdot \mathrm{Pri}^{\mathrm{int}}_a(t)$ |
| 2 | $\mathrm{Pri}^{\mathrm{adj}}_a(p) \cdot \mathrm{Pri}^{\mathrm{shift}}_a(t)$ |
| 3 | $\mathrm{Pri}^{\mathrm{adj}}_a(p) \cdot \mathrm{Pri}^{\mathrm{int}}_a(t)$ |
| 4 | $\mathrm{Pri}^{\mathrm{adj}}_a(p)$ |
| 5 | $\mathrm{Pri}^{\mathrm{shift}}_a(t) \cdot \mathrm{Pri}^{\mathrm{int}}_a(t)$ |

(continued)

| Class | Priority Function Pri$_a$(p,t) |
|---|---|
| 6 | $\text{Pri}_a^{\text{shift}}(t)$ |
| 7 | $\text{Pri}_a^{\text{int}}(t)$ |
| 8 | 1 |

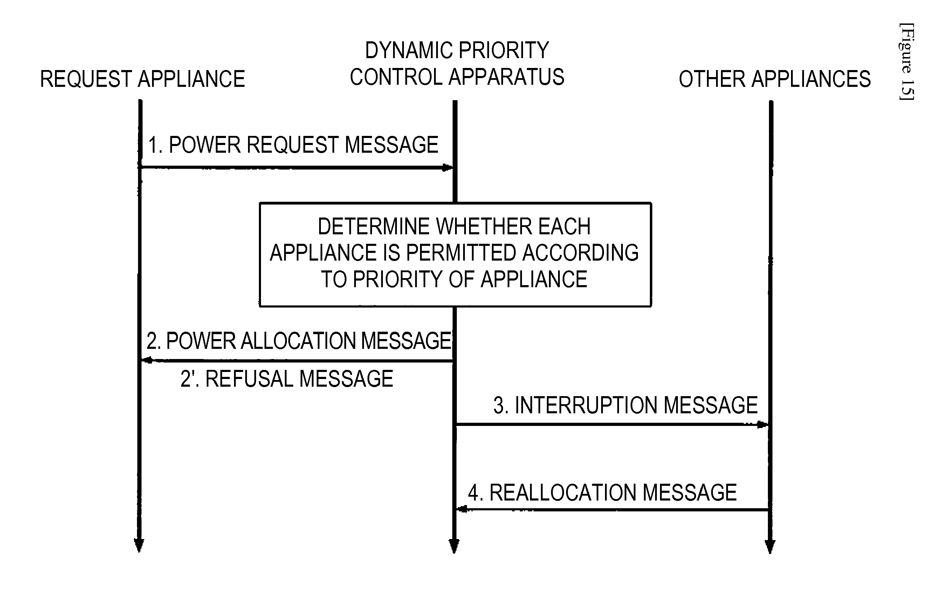

Figure 15 is a diagram explaining a processing procedure by the priority apparatus supplying power based on the priorities in response to a power request message.

1. The ST connected to the device transmits a power request message to the priority apparatus.
2. The priority control apparatus determines the priorities of the device that has transmitted the power request message and the devices in operation, from the currently available supply and the life pattern in the household.
3. According to the priorities of the devices, a power allocation message (2) including permitted power consumption and time is returned to each device, or a refusal message (2') is returned to devices to which the power cannot be supplied.
When a device in operation is to be suspended or the power is to be reduced because the priority is low, an interruption message (3) is transmitted to the device.
4. The devices for which the power use is permitted operate with the permitted power, for the permitted time. The devices for which the power use is refused transmit reallocation messages after a certain time (4).

In this processing procedure, the user can set the maximum available electric energy (ceiling) to realize the power reduction as much as the user wants.

The processing procedure will be described in detail. A device $a_{req}$ that needs power transmits a power request message (Table 4) to a server (1 of Figure 15). The server that has received the request immediately compares a sum $E'_{total}(t_{noW})$ of total use power $E_{total}(t_{noW})$ at current time $t_{noW}$ and request power $E_{req}$ with a power use plan $T_i(t_{noW})$. If the entire power (sum) $E'_{total}(t_{noW})$ is below the plan, the requested power $E_{req}$ is permitted (Expression (14)). If $a_{req} \in A_{Wait}$, the request is refused (2' of Figure 15). Otherwise, the priority of each device is calculated, and the power of another device with a lower priority than the device $a_{req}$ is reduced (3 of Figure 15) in an interruption process (Expression (15)). The power is secured, and the total use power $E_{total}(t_{noW})$ is updated to determine the reduction in the power supply according to the characteristics of the device. A message provided with information described in Table 4 such as available power $E_{supply}$ is immediately transmitted to the device $a_{req}$, and the device uses power according to the message. The devices for which the power supply is refused or interrupted and $a_{req}$ determine power use policies again in the next interval process (4 of Figure 15).

$$E_{supply} = \begin{cases} E_{req} & if\ E'_{total}(t_{noW}) \le T_1(t_{noW}) \\ E_{refuse} & otherwise \end{cases} \tag{14}$$

$$E_{refuse} = \begin{cases} 0 & if\ a \in A_{wait} \\ E_{adj} & else\ if\ a \in A_{adj} \\ E_{req} & otherwise \end{cases} \tag{15}$$

$$E_{adj} = max(T_i(t_{noW}) - E_{total}(t_{noW}), E_{req}^{min}) \tag{16}$$

( $E_{req}^{min}$ : Minimum activation power of request device)

As described, the priority apparatus that has received requests from the devices compares the sum $E'_{total}(t_{noW})$ of the total use power $E_{total}(t_{noW})$ in operation at the current time $t_{noW}$ and the request power $E_{req}$ with the power use plan $T_i(t_{noW})$. If the sum $E'_{total}(t_{noW})$ exceeds the power use plan $T_i(t_{noW})$, the power of a device $a_{min}$ with the minimum priority is reduced according to Expression (15), and the priority is updated.

Data of the power request message transmitted by the ST to the priority apparatus will be described in Table 4.

Data of fields of values and fields of required classes is associated with items of device identification ID, request power, minimum activation power, interruptible time, and required activation time shown in fields of items in Table 4. The ST transmits the data of the values and the required classes to the priority apparatus.

[Table 4]

| Item | Value | Required class |
|---|---|---|
| Electric device identification ID | ID | 1-8 |
| Request power | Ereg (W) | 1-8 |
| Minimum activation power | Emin (W) | 1-4 |
| Interruptible time | Time | 1,3,5,7 |
| Required activation time | Time | 1,2,5,6 |

Data of the message returned by the priority apparatus to the ST will be described in Table 5.

Data of fields of values is associated with device identification ID, type of message, permitted average power, and permitted use time shown in fields of items of Table 5. The priority apparatus transmits the data to the ST.

[Table 5]

| Item | Value |
|---|---|
| Device identification ID | ID |
| Type of message | Permit/refuse |
| Permitted average power | $E_{supply}$ (W) |
| Permitted use time | Time |

The above-described dynamic priority control means 1 including the initial target value update means 120 and the power arbitration means 122 can save power by reducing the accumulated power and can avoid a massive blackout at the peak, because the instantaneous power does not exceed the upper limit, and the accumulated power does not exceed the target value C.

(Second Embodiment)

The priority apparatus 1 can ultimately control the instantaneous power equal to or below the maximum instantaneous power and can control the power to satisfy the target value C of the accumulated power. However, when a device is used, there may be an unexpected increase in the instantaneous power due to load fluctuation or the like, and the power may exceed the maximum instantaneous power. A second embodiment for handling such a case will be described.

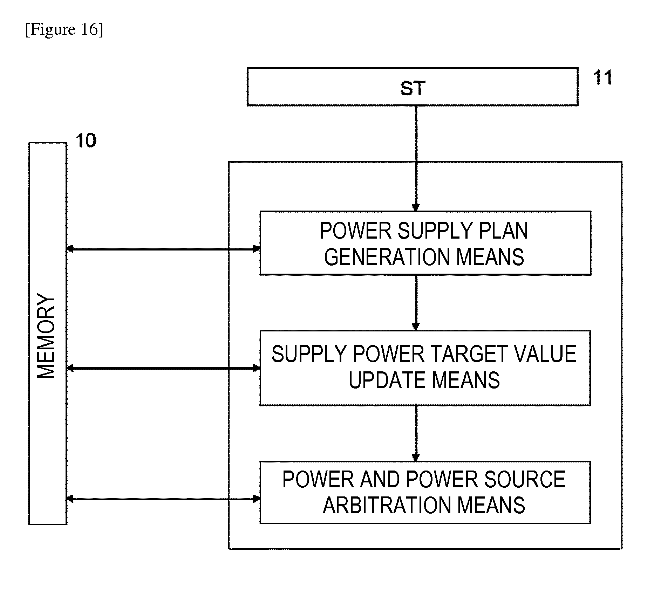

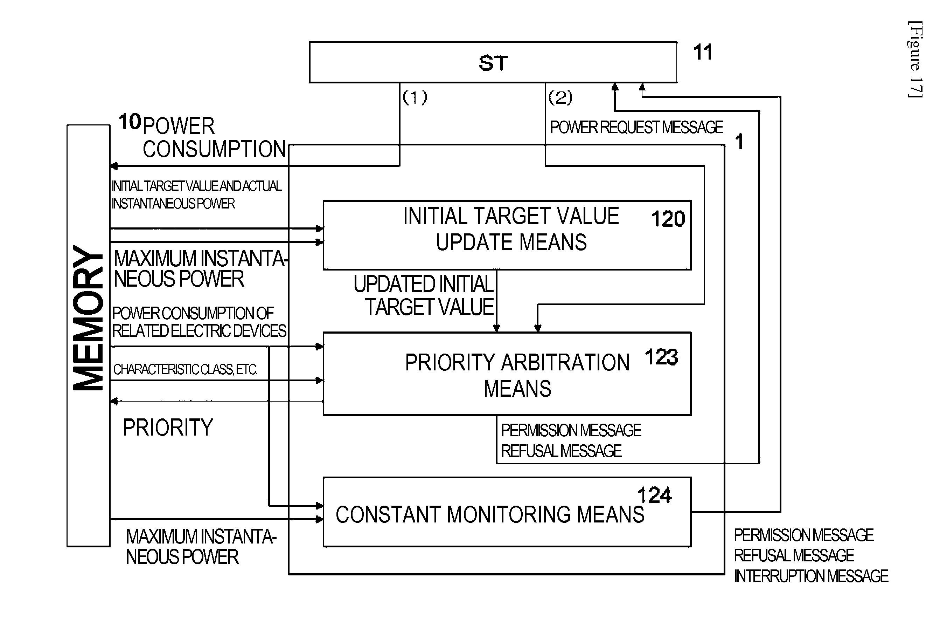

Figure 16 is a functional block diagram explaining functions included in a multiple power source management apparatus, and Figure 17 is a functional block diagram of the second embodiment.

The priority apparatus includes the initial target value update means 120, priority arbitration means 123, and constant monitoring means 124.

The initial target value update means 120 and the priority arbitration means 123 have the same functions as the means described above, and the description will not be repeated.

The constant monitoring means 124 constantly monitors the power consumption, and when the entire power consumption exceeds the maximum instantaneous power for equal to or longer than a certain period d (about 0.5 to 2 seconds), the priority arbitration means 123 performs arbitration based on the priorities without waiting for a lapse of $\tau$, so that the entire power consumption falls below the maximum instantaneous power.

The former immediately makes a determination in response to the power request transmitted from a device when, for example, the switch is turned on and maintains the QoL by not inhibiting the use of the device. The latter is performed for continued requests from the devices, and an update of plan values and arbitration between devices are performed. If the supply power is always changed according to the situation that changes from moment to moment, there can be a situation with unstable operation of devices, such as, for example, a situation in which a light bulb flickers because the brightness always changes. Therefore, the minimum control interval $\tau$ is implemented to attain the stabilization as a whole. The maximum instantaneous power is further secured by always monitoring the power so that the power does not exceed the maximum instantaneous power.

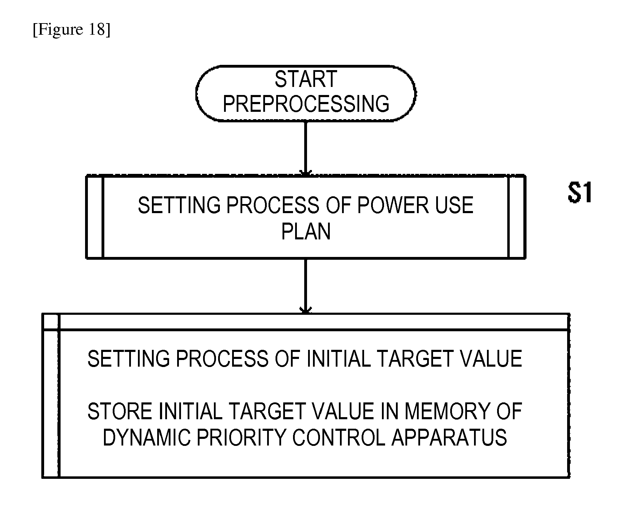

Figure 18 is an overall flow chart showing preprocessing by the CPU of the priority apparatus before the activation of the priority apparatus.

Before the activation of the CPU of the priority apparatus, a process of setting initial target values of a power use plan and storing the initial target values in the memory is executed as preprocessing in step S 1.

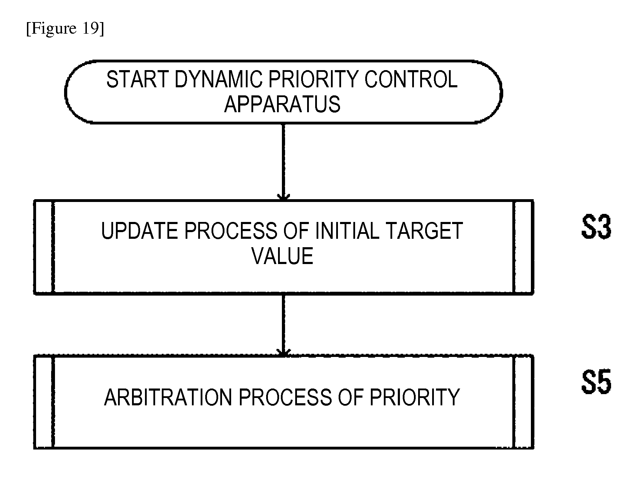

Figure 19 is a flow chart showing entire processing of the CPU after the activation of the CPU of the priority apparatus. After the activation, the CPU of the priority apparatus executes an update process of the initial target values in step S3 and executes an arbitration process of the priorities in step S5.

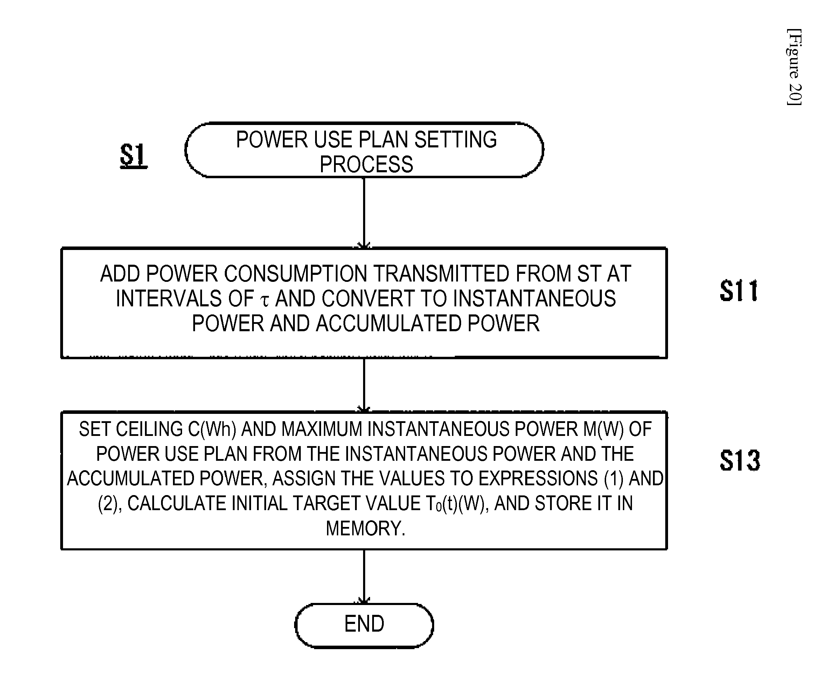

Figure 20 is a flow chart of the power use plan setting process of step S 1 described above. As shown in Figure 20, the CPU adds and averages the power consumption of one day, one week, one month, or the like transmitted from the ST of each device at intervals of the minimum control intervals $\tau$, such as 10 minute intervals, to convert the power consumption to instantaneous power and accumulated power in step S11. In step S 13, an initial target value $T_0(t)(W)$ as an example of the power use plan is created from Expressions (17) and (18), wherein the ceiling (upper limit of accumulated power) set by the user from the instantaneous power and the accumulated power is C(Wh), the maximum instantaneous power (upper limit of instantaneous power) is M(W), and the power demand predicted value at the time t is D(t)(W).

$$D'(t) = \begin{cases} D(t) & if\ D(t) \leq M \\ M(t) & otherwise \end{cases} \qquad (17)$$

$$T_0(t) = \frac{C}{\displaystyle\sum_{t_{start}}^{t_{end}} \tau\, D'(t)} D'(t) \qquad (18)$$

The initial target value $T_0(t)(W)$ is stored in the memory in the preprocessing before the activation.

Examples of other power use plans include the peak reduction plan for reducing only the power use peak exceeding the instantaneous power of the power use plan of one day (Figure 9-2) and the cost reduction plan for reducing the power according to the power cost (Figure 9-3). The initial target value can be set by these reduction plans, and these reduction plans can be combined to set the initial target value.

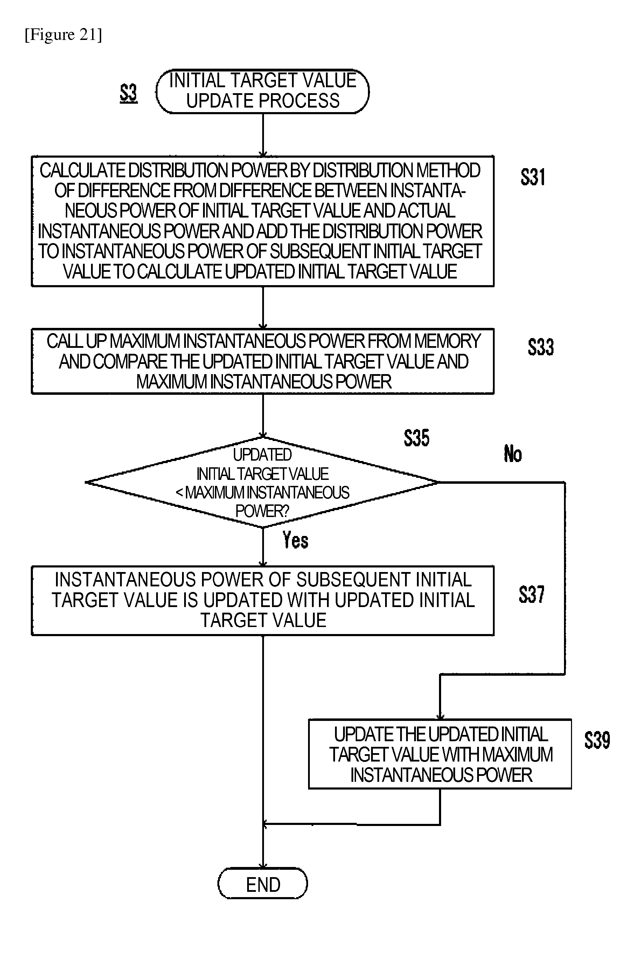

Figure 21 is a flow chart of the initial target value update process of step S3 described above. As shown in Figure 21, the CPU calculates distribution power by a distribution method of difference (uniform distribution method of difference or instantaneous power distribution method) from the difference between the instantaneous power of the initial target value and the actual instantaneous power and adds the distribution power to the instantaneous power of the subsequent initial target value to calculate an updated initial target value in step S31. The updated initial target value and the maximum instantaneous power are compared in step S33, and if it is determined Yes in S35, the instantaneous power of the subsequent initial target value is updated with the updated initial target value in step S37. If it is determined No, the initial target value is updated with the maximum instantaneous power to set the updated initial target value in step S39.

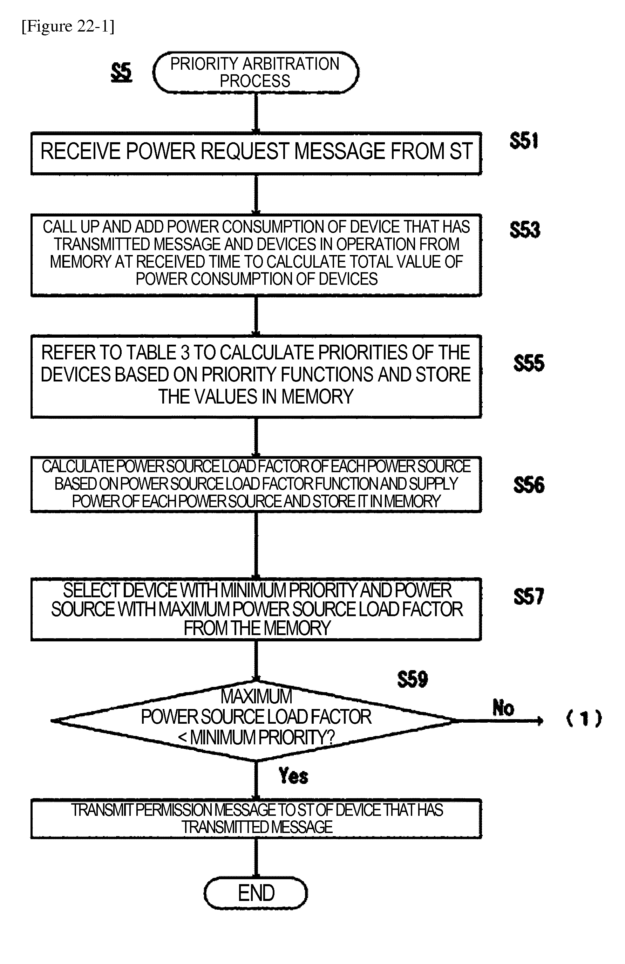

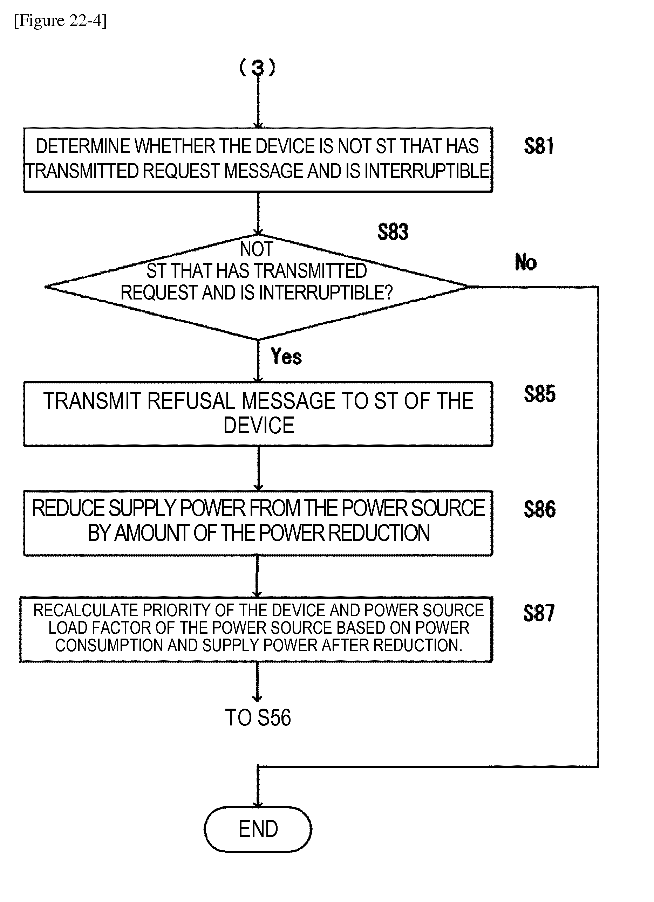

Figures 22-1 to 22-4 are flow charts of the priority arbitration process of step S5 described above. As shown in Figure 22-1, when the CPU receives a power request message from an ST in step S51, the CPU calls up the power consumption of the device that has transmitted the power request message and the power consumption of the devices in operation from the memory at the time of the reception of the power request message and adds the power consumptions to obtain a total value in step S53.

In step S55, the priorities of the devices are calculated based on the priority functions with reference to Table 3, and the values are stored in the memory.

In step S56, power source load factors of power sources are calculated and stored in the memory based on the power source load factor functions and the supply power of the commercial power source as well as power sources including storage batteries if necessary. In step S57, the device with the minimum priority and the power source with the maximum power source load factor are selected from the memory.

The minimum priority and the maximum power source load factor are compared. If it is determined Yes in step S59, a permission message is transmitted to the ST of the device that has transmitted the message in the following step, and the process ends. If it is determined No in step S59, the process proceeds to step S65 of (1).

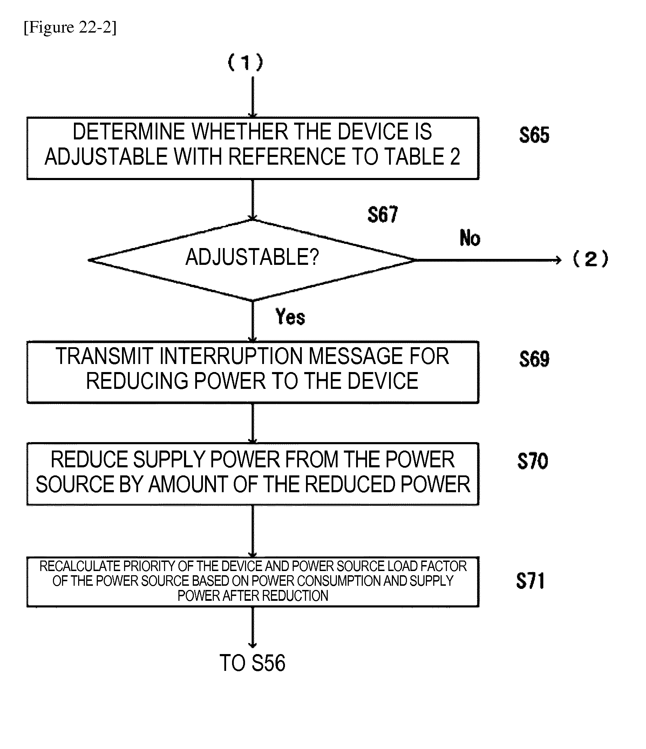

As shown in Figure 22-2, whether the device is adjustable is determined with reference to Table 2 in step S65. If it is determined Yes in step S67, an interruption message for lowering the power is transmitted to the device in step S69, and the supply power equivalent to the power reduction is reduced from the power source in step S70. In step S71, the priority of the device and the power source load factor of the power source are recalculated based on the power consumption and the supply power after the reduction, and the process returns to step S56.

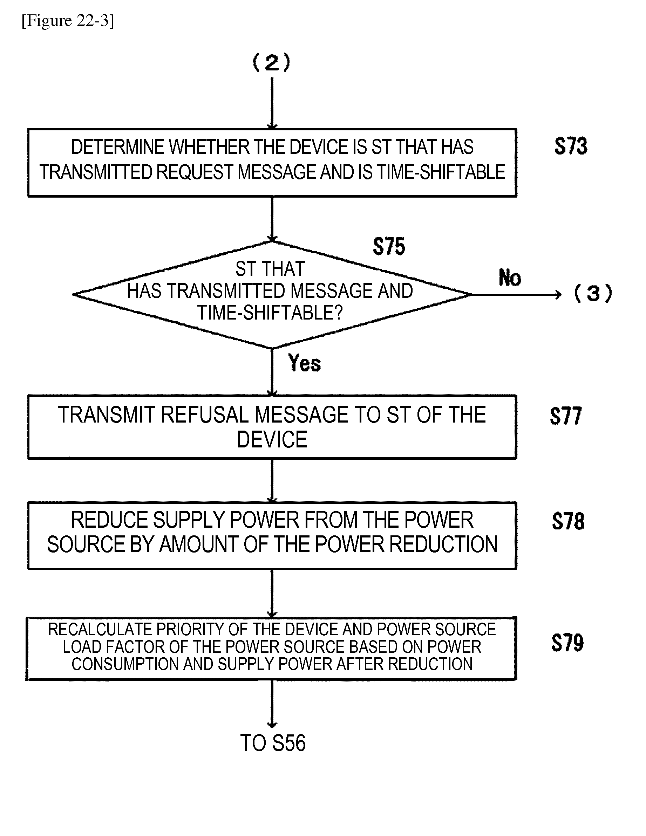

As shown in Figure 22-3, whether the device is the ST that has transmitted the request message and is time-shiftable is determined in step S73. If it is determined Yes in step S75, a refusal message is transmitted to the ST of the device in step S77, and the supply power equivalent to the power reduction is reduced from the power source in step S78. The priority of the appliance and the power source load factor of the power source are recalculated based on the power consumption and the supply power after the reduction in step S79, and the process returns to step S56. If it is determined No in step S75, the process proceeds to step S81 of (3). As shown in Figure 22-4, whether the device is not the ST that has transmitted the request message and is interruptible is determined in step S81. If it is determined Yes in step S83, a refusal message is transmitted to the ST of the device in step S85, and the supply power equivalent to the power reduction is reduced from the power source in step S86. The priority of the appliance and the power source load factor of the power source are recalculated based on the power consumption and the supply power after the reduction in step S87, and the process returns to step S56. If it is determined No in step S83, the process ends.

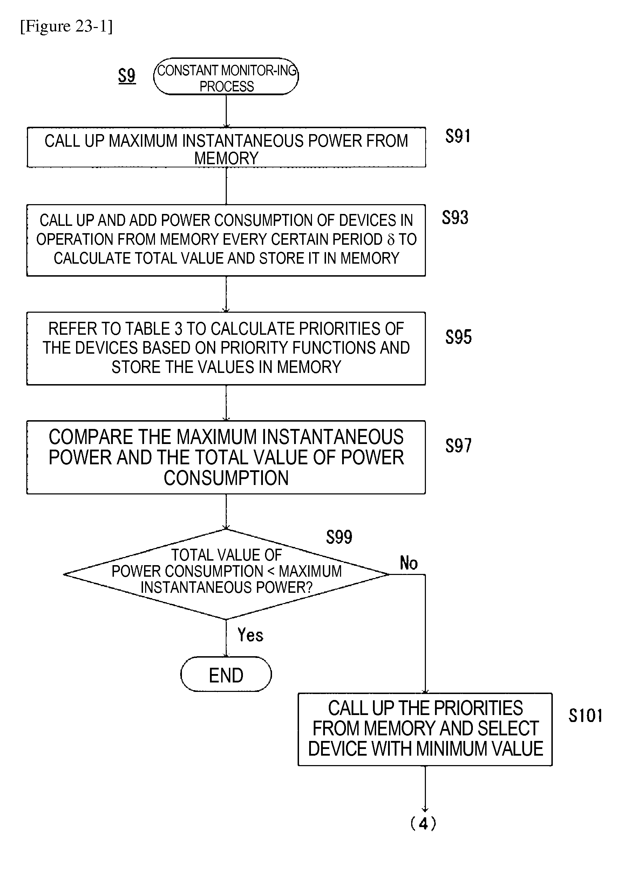

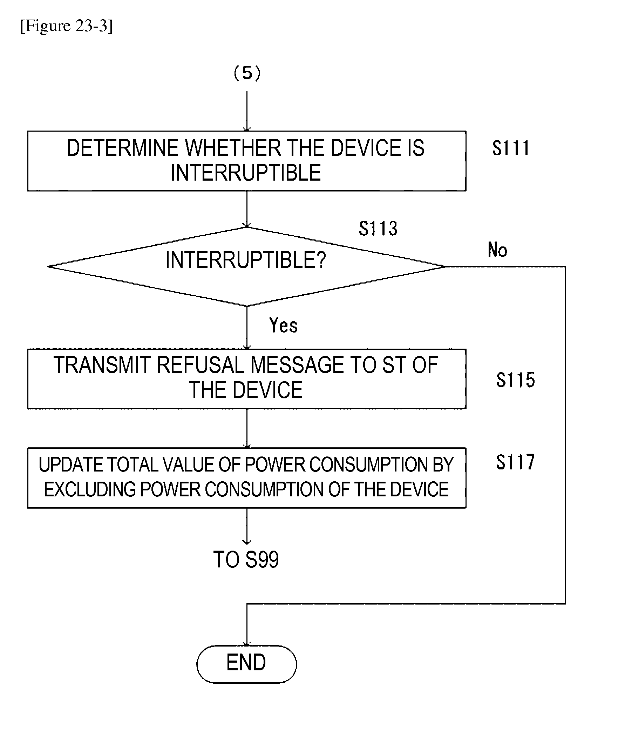

Figures 23-1 to 23-3 are flow charts of the constant monitoring process.

As shown in Figure 23-1, the CPU calls up the maximum instantaneous power from the memory in step S91 and calls up and adds the power consumptions of the devices in operation from the memory every certain period $\delta$ (0.5 to 2 seconds) to obtain the total value of the power consumption in step S93. In step S95, the priority of the device is calculated based on the priority function with reference to Table 3, and the value is stored in the memory. The total value of the power consumption and the maximum instantaneous power are compared in step S97, and the process ends if it is determined that the total value of the power consumption is small in step S99. If it is determined that the total value of the power consumption is large in step S99, the priorities are called up from the memory to select the device with the minimum value in step S101. The process proceeds to (4).

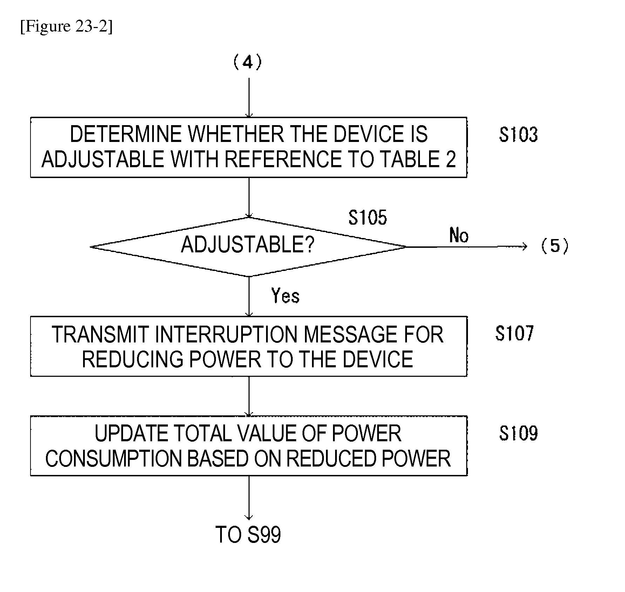

As shown in Figure 23-2, whether the device is adjustable is determined with reference to the priority class data of Table 2 in step S103. If the determination is Yes in step S105, an interruption message for lowering the power is transmitted to the device in step S107. The total value of the power consumption is updated based on the lowered power in step S109, and the process returns to step S99. This is repeated until the total value of the power consumption is smaller than the maximum instantaneous power. If the determination is No, the process proceeds to (5).

As shown in Figure 23-3, whether the device is interruptible is determined in step S111. If the determination is Yes in step S113, a refusal message is transmitted to the ST of the device in step S 115. The power consumption of the device is excluded to update the total value of the power consumption in step S117, and the process returns to step S99. This is repeated until the total value of the power consumption is smaller than the maximum instantaneous power.

As is evident from the repetition of the process until the total value of the power consumption becomes smaller than the maximum instantaneous power, the power arbitration means of the priority apparatus controls the power supply to the electric device so that the power supply is always below the maximum instantaneous power.

As is evident from the processing procedure of steps S51 to S 117 by the power arbitration means and the device characteristic class data, the priority apparatus targets all devices installed in the household and the office. The power does not exceed the ceiling and the upper limit of the maximum instantaneous power even if devices of three types of characteristics are not installed, or for example, even if adjustable devices are not installed.

As described, the use power of each device is always transmitted to the priority apparatus. The priority apparatus accumulates this in the memory and integrates the accumulated use power of each device to obtain the accumulated power of a certain period (one day, one week, one month, or the like). The power arbitration means controls the power supply to the electric devices so that the power supply is always below the maximum instantaneous power, and as a result, the power does not exceed the upper limit (ceiling) of the accumulated power.

In a storage battery management system (hereinafter, called "storage battery system") for on-demand power control system of the present invention, a storage battery for example is added as necessary to the commercial power source to extend the power source to a plurality of power sources, and "power source QoEn" is defined as characteristic description for the arbitration of the power sources. Here, the power source QoEn of the commercial power source and the storage battery is defined as in Table 6.

[Table 6]

| Commercial power source | | Storage battery | |
|---|---|---|---|
| Maximum instantaneous power | $\overline{PS_C(t)}$ [W] | Maximum discharge power | $\overline{PS_b}$ [W] |
| Ceiling | $\overline{ES_c}$ [Wh] | Maximum charge power | $\underline{PS_b}$ (<0) [W] |
| Power cost | C (t) [yen/Wh] | Storage capacity | $\overline{\overline{ES_b}}$ [Wh] |
| CO2 emission factor | G [kg/kWh] | Charge efficiency | $\alpha_i$ (0<$\alpha_i$<1) |
| | | Discharge efficiency | $\alpha_o$ (0<$\alpha_o$<1) |
| | | Self-discharge power | $\alpha_n$ [W] |
| Power source load factor | $LF_c$ (p) | Power source load factor | $LF_b$ (p) |

The maximum instantaneous power and the ceiling of the commercial power source are the upper limit of the instantaneous power and the upper limit of the accumulated power used in the conventional EoD control system, and the user can arbitrarily set them. The electric bill, the $CO_2$ emission factor, and the like of each time are set based on the power contract.

For the storage battery, a maximum value of power that can be supplied from the storage battery (maximum discharge power), a maximum value of power that can be charged in the storage battery (maximum charge power), and electric energy that can be charged in the storage battery (storage capacity) are defined. In the storage battery system of the present invention, the supply from the storage battery is expressed by a positive number, and the charge in the storage battery is expressed by a negative number. Since a loss or self-discharge occurs at the charge and discharge, charge efficiency, discharge efficiency, and self-discharge power that are factors indicating charge-discharge efficiency are defined.

Power source load factors (LF: also called load factors) of the power sources correspond to dynamic priorities of the devices and are functions indicating supply capacities of the power sources according to the situation. This will be described in detail later.

(Plan Phase: Power Use Plan and Power Supply Plan)

A method of creating a power use plan and a power supply plan in a plan phase will be described.

Only the commercial power source is handled in the conventional EoD control system. Therefore, the power use and the power supply are the same, and only the power use plan is created. In the present research, the storage battery is added to extend the power source to a plurality of power sources, and the power supply plans of the individual power sources are created at the same time.

The power use plan without the use of the storage battery is set as an initial plan, and the storage battery is used from there to minimize the dissatisfaction indicating the inconvenience of the user to create a power supply plan using the storage battery.

The appliance group is defined as A, each appliance is defined as a $\in$ A, and a predicted power consumption pattern PD_a(t) of each appliance is learned in advance. The commercial power source is defined as c, the storage battery is defined as b, and the power supply pattern of each power source is defined as $PS_s(t)$ (wherein s$\in$[c, b]). In this case, the total supply power and the total power consumption always coincide as in the following expression due to physical restrictions.

$$\sum_{\alpha \epsilon A} PD_a(t) = \sum_{s \epsilon (c,b)} PS_s(t), \qquad (19)$$

For the storage battery, $PS_b(t)$>0 means discharge, and $PS_b(t)$<0 means charge from the commercial power source.

Accumulated supply power $ES_c(t)$ of the commercial power source and storage amount $ES_b(t)$ of the storage battery are defined as follows.

$$ES_c(t) = \sum_{\delta = 0}^{t} PS_c(\delta) \qquad (20)$$

$$ES_b(t) = \sum_{\delta = 0}^{t} PS'_b(\delta) \qquad (21)$$

$$PS'_b(t) = \begin{cases} -\alpha_b PS_b(t) & if\ PS_b(t) < 0 \\ -\dfrac{1}{\alpha'_\delta} PS_b(t) & otherwise, \end{cases} \qquad (22)$$

Here, $\alpha_b$ and $\alpha_b'$ indicate charge-discharge efficiencies, wherein $0<\alpha_b 1$ and $0<\alpha_b'<1$. Although Expressions (20) to (22) are expressed by an integral to be exact, the average power of each unit time segment (20 seconds in the experiment) is used here as a power value, and the expressions are expressed by a sum instead of an integral.

The maximum instantaneous power is expressed by

$$\overline{PS_c(t)},$$

and the ceiling of the accumulated power is expressed by

$$\overline{ES_c}$$

as restrictions for the power feed from the commercial power source set by the user. The maximum discharge power is expressed by

$$\overline{PS_b},$$

the maximum charge power is expressed by

$$\overline{-PS_b},$$

and the storage capacity is expressed by

$$\overline{ES_b}$$

as characteristics of the storage battery. In this case, the supply power of each power source needs to satisfy the following restrictions.

$$PS_c(t) < \overline{PS_c(t)},\ ES_c(T) < \overline{ES_{c\prime}} \qquad (23)$$

$$\underline{PS_b} < PS_b(t) < \overline{PS_b}, 0 < ES_b(t) < \overline{ES_{b'}} \qquad (24)$$

Here, T indicates a period of creating the plan, such as one day and one week, and this will be called a plan period in the present research.

(1) Creation of Initial Power Use Plan

First, the storage battery is not taken into account, and a power use plan when only the commercial power is used is created as an initial value.

In this case, an initial power use plan

$$PD^{PLAN}(t)$$

that is an initial power use plan satisfying the maximum instantaneous power and the ceiling of the commercial power source is created as in the following Expression (25)

$$PD^{PLAN}(t) = \frac{\overline{ES_c}}{\sum D'(t)} D'(t) \qquad (25)$$

$$D'(t) = \begin{cases} \overline{PS_c(t)} & \text{if } D(t) > \overline{PS_c(t)} \\ D(t) & \text{otherwise} \end{cases} \qquad (26) \quad,$$

wherein

$$D(t) = \sum_{\alpha \in A} PD_a(t) \quad.$$

Here, the use power at the peak is cut so that the power does not exceed the maximum instantaneous power

$$\overline{PS_c(t)} \quad,$$

and a certain proportion is reduced from the predicted demand in each time zone so that the accumulated power does not exceed the ceiling

$$\overline{ES_c}.$$

The supply plan of the commercial power source is

$$PS_c^{PLAN}(t) = PD^{PLAN}(t) \quad.$$

Therefore, this is the same as the power use plan created in Expression (25). Furthermore, the initial value of the supply plan of the storage battery is

$$PS_b^{PLAN}(t) = 0 \quad .$$

(2) Creation of Power Supply Plan by Dissatisfaction Minimization

In this plan, the use power is cut at the peak of demand to reduce the power consumption of the device below the maximum instantaneous power of the commercial power source.

Therefore, in the initial power use plan

$$\mathrm{PD}^{\mathrm{PLAN}}(t) \quad ,$$

the use power at the peak is cut to always satisfy the maximum instantaneous power

$$\overline{\mathrm{PS}_C(t)} \quad .$$

However, the peak of power demand is a time zone that the consumer needs the power most, and the limitation of the power that can be used in this time zone significantly reduces the comfort of the user's life.

Thus, based on the difference between the predicted power use pattern and the power use plan, the storage battery system of the present invention defines the dissatisfaction

$$DS(PD^{PLAN})$$

at the power use as follows and shifts the time of the supply power through the charge and discharge of the storage battery to minimize the dissatisfaction to solve the problem of significantly reducing the comfort.

The dissatisfaction function is defined by the following expression.

$$\mathrm{DS}\left(\mathrm{PD}^{\mathrm{PLAN}}\right) = \frac{1}{|T|}\sqrt{\sum_{t=0}^{\mathrm{T}} \mathrm{ds}\left(D(t), \mathrm{PD}^{\mathrm{PLAN}}(t)\right)}, \qquad (27)$$

wherein

$$\mathrm{ds}(d, p) = \begin{cases} (d - p)^2 & \text{if } d > p \\ -(d - p)^2 & \text{otherwise} \end{cases} \qquad (28)$$

The dissatisfaction function is designed so that the value is larger when the power is largely reduced in the same time zone, compared to when the power is reduced little by little in the entire plan period.

The storage battery is used to modify the initial power use plan to minimize the dissatisfaction, and the power supply plan of each power source

$$PS_c^{PLAN}(t), PS_b^{PLAN}(t)$$

is created. This problem can be formulated as follows.

$$\text{minimize:} DS(PD^{PLAN}) \tag{29}$$

$$\text{subject to:} PS_c^{PLAN}(t) < \overline{PS_C(t)}, ES_c^{PLAN}(T) < \overline{ES_C} \tag{30}$$

$$\underline{PS_b} < PS_b^{PLAN}(t) < \overline{PS_b}, 0 < ES_b^{PLAN}(t) < \overline{ES_b} \tag{31}$$

$$PD^{PLAN}(t) = PS_c^{PLAN}(t) + PS_b^{PLAN}(t), \tag{32}$$

(Here, functions with superscript PLAN indicate power use plan, power feed plan of commercial power source, and charge-discharge plan of storage battery.)

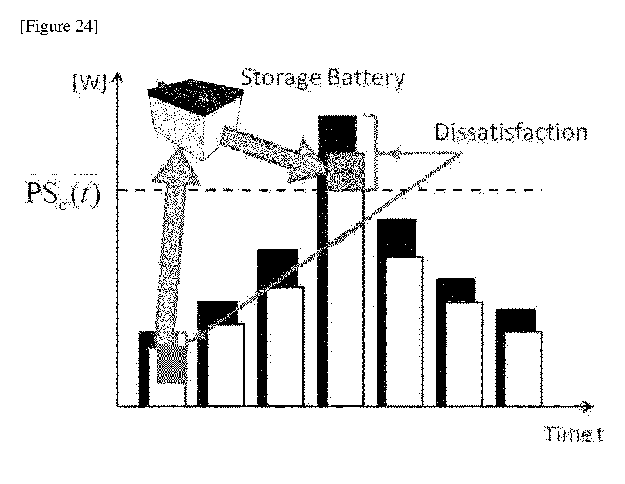

The dissatisfaction minimization problem can be solved by using the storage battery as in Figure 24 to shift the time of the power consumption. As a result, the power use plan is modified, and the power feed plan of the commercial power source and the charge-discharge plan of the storage battery are created. The following shows a specific calculation algorithm.

[Initialization]

Based on

$$PD^{PLAN}(t)$$

obtained from Expressions (25) and (26), the

$$PS_c^{PLAN}(t) := PD^{PLAN}(t), PS_b^{PLAN}(t) := 0$$

An initial value of a set of unit time segments that are candidates for the discharge destination in the time shift is

$$\mathcal{T}_{DST} := \{t | 0 \le t \le T\}$$

[Step 1.]

From
$t_{DST}$,
the time segment with the largest dissatisfaction
$t_{DST}$
is selected.

$$t_{dst} = \arg\max_{t < T} \left\{ \left( PD(t) - PD^{PLAN}(t) \right)^2 \right\}$$

or

$$t_{DST} := \underset{t \in \mathcal{T}_{DST}}{\arg\max} \, ds\left(\mathcal{D}(t), \text{PD}^{\text{PLAN}}(t)\right) \tag{33}$$

Furthermore, in the time segments before

$$t_{DST} \, ,$$

a set of time segments with smaller dissatisfaction than

$$t_{DST}$$

is

$$\mathcal{T}_{SRC} \, .$$

$$\mathcal{T}_{SRC} := \{t | 0 \le t < t_{DST} \wedge$$

$$ds(D(t), PD^{PLAN}(t)) < ds(D(t_{DST}), PD^{PLAN}(t_{DST})) \tag{34}$$

[Step 2.]

From

$$\mathcal{T}_{SRC} \, ,$$

the time segment with the smallest dissatisfaction

$$t_{SRC} \, ,$$

is selected.

$$t_{src} = \underset{t < t_{dst}}{\arg\max} \left\{ \left( PD(t) - PD^{PLAN}(t) \right)^2 \right\}$$

or

$$t_{SRC} := \underset{t \in \mathcal{T}_{SRC}}{\arg\min} \, ds\left(\mathcal{D}(t), \text{PD}^{\text{PLAN}}(t)\right)^2 \tag{35}$$

Here, if the dissatisfaction of the charge source and the discharge destination satisfies

$$ds\left(D(t_{SRC}), \mathrm{PD}^{\mathrm{PLAN}}(t_{SRC})\right) < ds(D(t_{DST}), \mathrm{PD}^{\mathrm{PLAN}}(t_{DST})) \;,$$

Step 3. is executed. If not, Step 5. is executed.

[Step 3.]

The storage battery is charged from

$$t_{SRC}$$

selected in Step 2. and is discharged in

$$t_{DST}$$

selected in Step 1. Here, charge-discharge power C is a maximum value satisfying the following expressions.

$$\left(\underline{PS_b} \le PS_b(t_{SRC}) - C\right) \wedge \left(PS_b(t_{DST}) + \alpha_b \alpha'_b\, C \le \overline{PS_b}\right) \tag{36}$$

$$\forall t\, \mathrm{ES}_b^{\mathrm{PLAN}}(t) < \overline{\mathrm{ES}_{b\prime}} \tag{37}$$

$$ds(D(t_{SRC}), \mathrm{PD}^{\mathrm{PLAN}}(t_{SRC}) - C)$$
$$\le ds(\mathrm{D}(t_{DST}), \mathrm{PD}^{\mathrm{PLAN}}(t_{DST}) - \alpha_b \alpha'_b C) \tag{38}$$

Specifically, the charge-discharge power C is obtained as follows. First, the maximum C satisfying Expression (37) is provided by the following expression.

$$C' = \frac{1}{\alpha_b \alpha'_b + 1}\left(\left(D(t_{DST}) - \mathrm{PD}^{\mathrm{PLAN}}(t_{DST})\right) - \left(D(t_{SRC}) - \mathrm{PD}^{\mathrm{PLAN}}(t_{SRC})\right)\right) \tag{39}$$

Next, the charge-discharge power C is corrected within a range not exceeding the maximum charge-discharge power according to Expression (36).
The spare energy up to the maximum charge power in

$$t_{SRC}$$

is

$$C_{\mathrm{SRC}}^{\max} \;,$$

and the spare energy up to the maximum discharge power in

27

$$t_{\text{DST}}$$

is

$$C_{\text{DST}}^{\text{max}} \quad.$$

$$C_{\text{SRC}}^{\text{max}} = PS_b(t_{SRC}) - \underline{PS_{b\prime}} \tag{40}$$

$$C_{\text{DST}}^{\text{max}} = \frac{\overline{PS_b} - PS_b(t_{DST})}{\alpha_b \alpha'_b} \tag{41}$$

In this case, the maximum C satisfying Expression (36) is provided by the following expression.

$$C'' = \begin{cases} C_{\text{SRC}}^{\text{max}} & if\left( C' > C_{\text{SRC}}^{\text{max}} \right) \wedge \left( C_{\text{DST}}^{\text{max}} > C_{\text{SRC}}^{\text{max}} \right) \\ C_{\text{DST}}^{\text{max}} & if\left( C' > C_{\text{DST}}^{\text{max}} \right) \wedge \left( C_{\text{SRC}}^{\text{max}} > C_{\text{DST}}^{\text{max}} \right) \\ C' & otherwise \end{cases} \tag{42}$$

Lastly, the maximum C is corrected so that the storage amount in the charge-discharge period does not exceed the storage capacity according to Expression (43).

$$t_{max} := \arg\max_{t_{SRC} \le t \le t_{DST}} \left( \text{ES}_b^{\text{PLAN}}(t) \right) \tag{43}$$

$$C = \frac{C''}{\frac{\overline{ES_b} - \text{ES}_b^{\text{PLAN}}(t)}{a_b a'_b \tau}} \quad C'' < \frac{\overline{ES_b} - \text{ES}_b^{\text{PLAN}}(t_{\max})}{a_b a'_b \tau} \tag{44}$$
$$\text{otherwise}$$

Here, $\tau$ indicates the length of the time segment. If C>0, the plan is modified to charge and discharge electricity by C as follows.

Charge:

$$PD^{\text{PLAN}}(t_{\text{SRC}})$$

and

$$PS_b^{\text{PLAN}}(t_{\text{SRC}})$$

are reduced by C. More specifically, this means that in the time segment

$$t_{\text{SRC}} \text{ ,}$$

the storage battery is discharged by C without changing

$$\text{PS}_c^{\text{PLAN}}(t_{\text{SRC}})$$

(see Expression (32)).

$$\text{PS}_b^{\text{PLAN}}(t_{\text{SRC}}) := \text{PS}_b^{\text{PLAN}}(t_{\text{SRC}}) - C \qquad (45)$$

$$\text{PD}^{\text{PLAN}}(t_{\text{SRC}}) := \text{PD}^{\text{PLAN}}(t_{\text{SRC}}) - C \qquad (46)$$

Discharge:

In the time segment

$$t_{\text{DST}} \text{ ,}$$

the storage battery is discharged by an amount obtained by multiplying C by the charge-discharge efficiency.

$$\text{PS}_b^{\text{PLAN}}(t_{\text{DST}}) := \text{PS}_b^{\text{PLAN}}(t_{\text{DST}}) + a_b a_b' C \qquad (47)$$

$$\text{PD}^{\text{PLAN}}(t_{\text{DST}}) := \text{PD}^{\text{PLAN}}(t_{\text{DST}}) + a_b a_b' C \qquad (48)$$

[Step 4.]

$$J_{\text{SRC}} := J_{\text{SRC}} - \{t_{\text{SRC}}\}$$

is set, and if

$$J_{\text{SRC}} = \emptyset \text{ ,}$$

the process advances to Step 5., and otherwise, the process returns to Step 2.

[Step 5.]

$$J_{\text{DST}} := J_{\text{DST}} - \{t_{\text{DST}}\},$$

is set, and if

$$J_{\text{DST}} = \emptyset \quad ,$$

the algorithm ends. Otherwise, the process returns to Step 1.

The maximum value

$$\text{maxES}_b^{\text{PLAN}}(t)$$

of the storage plan obtained by this algorithm indicates the minimum storage capacity of the target customer. Positive and negative maximum gradients in the charge-discharge plan

$$\text{PS}_b^{\text{PLAN}}(t)$$

calculated by the algorithm indicates the required maximum charge-discharge power of the storage battery, and the specifications of the storage battery necessary for the customer can be designed from these values.

In this case, in the plan phase,

$$\overline{ES_b} = \infty$$

can be selected to minimize the dissatisfaction to obtain the required optimal capacity of the storage battery to minimize the dissatisfaction in each predicted demand pattern.

Definition of Characteristic Description of Power Source by Power Source Load Factor

In the conventional single power source EoD, the appliances that receive the supply power and the amount of the supply power are arbitrated based on the priorities of the appliances. In the EoD corresponding to multiple power sources proposed in the present research, from which power source the power will be supplied also needs to be arbitrated at the same time.

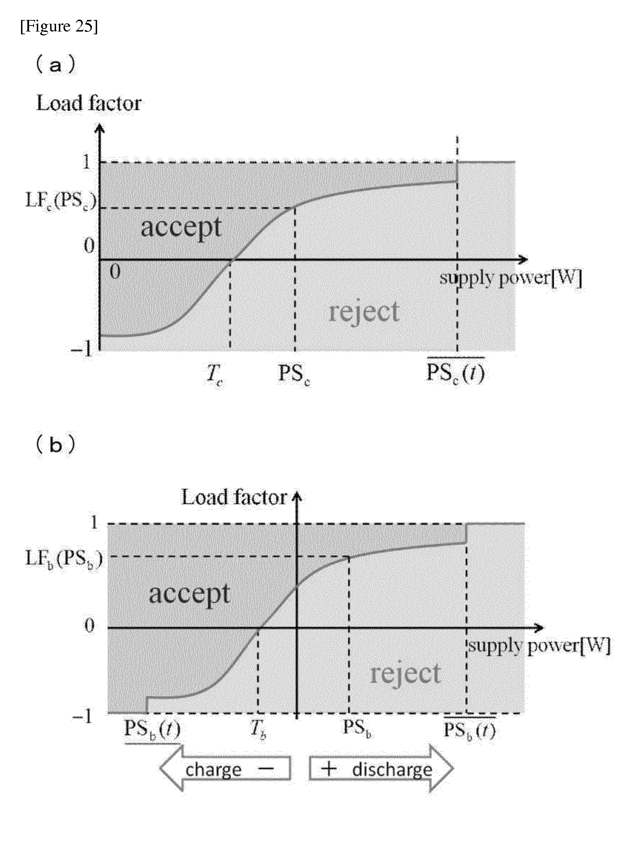

Consequently, the power source load factor (LF) is implemented as an indicator indicating how much load is imposed on each power source based on the characteristics and the state of each power source. As shown in Figure 25, the power source load factor is defined as in the following expression as a function for the supply power from the power source. The supply power is the commercial power in (a) of Figure 25, and the supply power is the storage battery in (b) of Figure 25.

$$\text{LF}_S(p) = \begin{cases} 1 & \text{if } p > \text{PS}_S \\ \dfrac{2}{\pi}\tan^{-1}\beta_S \dfrac{p - J_2}{\overline{ES_S} - ES_S(t)} & \text{if } \underline{\text{PS}_S} \le p \le \overline{\text{PS}_S} \\ & \text{if } p \le \overline{\text{PS}_S} \\ -1 \end{cases}$$

Although Ts is the target power of the power source s and is the same as the power supply plan value

$$T_S = PS_S^{PLAN}(t)$$

described in the previous section in the initial state, Ts is corrected according to the power use history in a periodic activation process described later. $\beta_s$ is a setting parameter for determining the inclination of the function.

The power source load factor is 0 when the supply power coincides with the target power Ts, and the power source load factor is greater when the supply power is greater than the target power. Therefore, the spare energy of power that can be supplied is greater in a power source with a smaller power source load factor, and this indicates that the power can be preferentially supplied to a new power request.

The power source load factor defined here is used for the arbitration of the power request of the appliance. The power is supplied if the priority of the request power from the appliance is higher than the power source load factor, and the request with a priority lower than the power source load factor is rejected.

Consequently, if the control of simply rejecting all power requests with which the total power consumption exceeds the target value Ts is performed, the user feels inconvenient because the power is significantly reduced as planned when a request that requires large power is requested at a time earlier than the power peak predicted at the plan. On the other hand, the present method using the power source load factor can realize flexible arbitration of supplying power according to the spare energy of the power source as long as the priority of the power request is high even if the power exceeds the target value.

In relation to the power arbitration of appliances, the inclination of the power source load factor function indicates how strictly the target value is maintained. In Expression (49), the inclination becomes steeper when the accumulated supply power

$$ES_S(t)$$

of the power sources approaches the upper limit

$$\overline{ES_S} \quad ,$$

, and the target value is designed to be more strictly maintained. The power source load factor is a negative value when the supply power is equal to or smaller than the target value, and the power is supplied for the power request with the priority equal to or smaller than 0 only when the supply power is equal to or smaller than the target value.

Based on the definition, the power source and appliance arbitration algorithm using the power source load factor needs to satisfy the following two conditions.

$$\sum_{a \in A} PD_a^{REQ} = \sum_{a \in A} PS_S^{RES} , \tag{50}$$

$$\forall a \in A, \forall s \in S : Pri_a\left(PD_a^{REQ}\right) \geq LF_S\left(PS_S^{REQ}\right) \tag{51}$$

Here,

$$PD_a^{REQ}$$

and

$$Pri_a\left(PD_a^{REQ}\right)$$

indicate the power allocated to the appliance a and the priority of the appliance a, respectively, and

$$PS_S^{RES}$$

indicates the supply power from the power source s. Expression (50) indicates a physical restriction that the total use power and the total supply power coincide, and Expression (51) indicates that power is supplied only for the power request with the priority equal to or greater than the power source load factor.

Real-Time Arbitration

A method of extending three real-time arbitration processes in the EoD system to the arbitration of multiple power sources will be described. Basically, (1) the arbitration is performed in an event drive process every time a power request message is received, and (2) the gap between the plan and the power use history is fed back in a periodic activation process. Furthermore, (3) the total power consumption is monitored in a constant monitoring process to prevent the total from exceeding the maximum instantaneous power. Hereinafter, the processes will be described in detail.

(1) Arbitration of Power Requests in Event Drive Process (Event Driven Process)

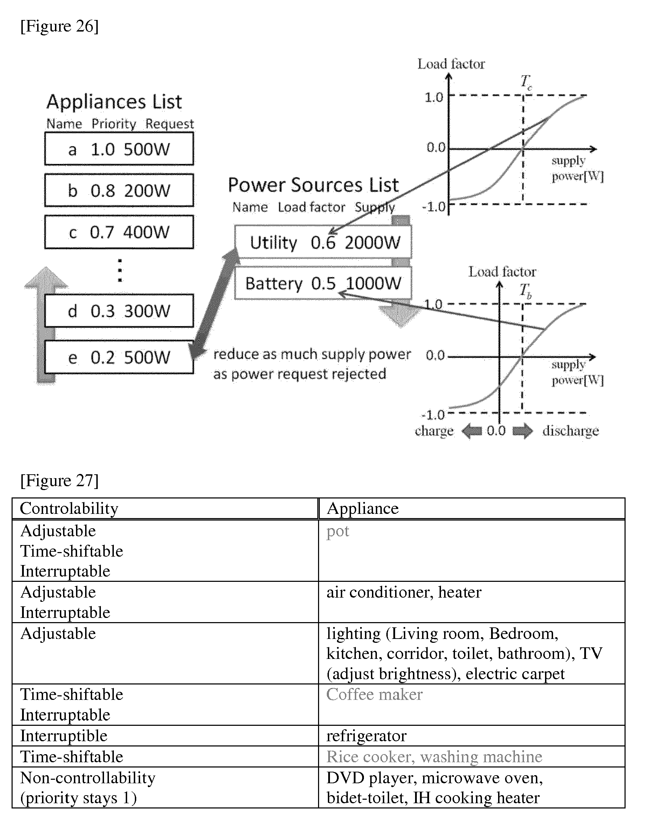

An object of the event drive process is to determine whether the power can be supplied in response to a power request message transmitted from an appliance according to the target power Ts of the power source. In the present research, a change in the operation mode associated with a large power fluctuation, such as ON/OFF of the switch of an appliance and high and low of a drier, is handled as an event of the appliance, and a power request message is issued at this timing.
A specific power source and appliance arbitration algorithm will be described below based on Figure 26. A set of currently operating appliances and appliances not yet subjected to arbitration although new power requests are received is defined as arbitration target appliances A, allocated power (when the device is in operation) or request power (when the device is a new request appliance) of an appliance

$$a \in A$$

is

$$PD_a^{REQ} \quad,$$

the priority of the appliance a with respect to allocation power p is

$$\mathrm{Pri}_a(p) \quad,$$

a set of power sources is

$$S = \{b, c\} \quad,$$

and the power source load factor of the power source s with respect to the supply power p is

$$\mathrm{LF}_S(p) \ .$$

[Initialization]

If

$$\sum_{a\in A} \mathrm{PD}_a^{REQ} < \sum_{s\in S} T_s$$

is satisfied, power is supplied to the appliance that has issued the new request, and the arbitration process is finished. Otherwise, according to Physical Constraint Equation (50) and based on

$$\sum_{a\in A} \mathrm{PD}_a^{REQ} \quad ,$$

the initial value

$$\mathrm{PS}_s^{RES}$$

of the supply power of each power source is obtained as follows.

$$\mathrm{PS}_s^{RES} = T_s + \frac{1}{|S|}\left(\sum_{a\,\in\,A} \mathrm{PD}_a^{REQ} - \sum_{s\,\in\,S} T_s\right) \tag{52}$$

[Step 1.]

An appliance

$$a_{\min} \in A$$

with the minimum priority, and a power source

$$\mathrm{S}_{\max}$$

with the maximum power source load factor are selected.

$$a_{\min} = \arg\min_{a\in A} \mathrm{Pri}_a\left(\mathrm{PD}_a^{REQ}\right), \tag{53}$$

$$\mathrm{S}_{\max} = \arg\max_{s\in S} \mathrm{LF}_s\left(\mathrm{PS}_s^{RES}\right), \tag{54}$$

[Step 2.]

If

$$\mathrm{Pri}_{a\min}\left(\mathrm{PD}_{a\min}^{\mathrm{REQ}}\right) \geq \mathrm{LF}_{s\max}\left(\mathrm{PS}_{s\max}^{\mathrm{RES}}\right)$$

is satisfied, Constraint Equation (51) regarding the priority is satisfied, and the algorithm is stopped. Otherwise, Step 3. is executed.

[Step 3.]

The supply power to

$$a_{\min}$$

is reduced according to the capability of the appliance

$$a_{\min}$$

(power request is time-shifted / operating appliance is interrupted / allocation power is reduced). The reduced power supply to

$$a_{\min}$$

is

$$\mathrm{PD}_{a\min}^{\mathrm{NEXT}} \, ,$$

, and the supply power of

$$s_{\max}$$

and the request power of

$$a_{\min}$$

are updated as follows.

$$\mathrm{PS}_{s\max}^{\mathrm{RES}} := \mathrm{PS}_{s\max}^{\mathrm{RES}} - \left(\mathrm{PD}_{a\min}^{\mathrm{REQ}} - \mathrm{PD}_{a\min}^{\mathrm{NEXT}}\right), \tag{55}$$

$$\mathrm{PD}_{a\min}^{\mathrm{REQ}} := \mathrm{PD}_{a\min}^{\mathrm{NEXT}} \tag{56}$$

If

$$a_{\min}$$

is time-shifted or interrupted,

$$a_{\min}$$

is removed from the arbitration target appliances A. If the allocation power is reduced, the allocation power and the priority are updated, and the process returns to Step 1.

In the algorithm, the arbitration is performed while transmitting the power allocation message of power reduction, interruption, or the like to the appliance. There is actually a communication/control delay between the transmission of the power allocation message and the change in the power after the change in the operation mode of the appliance. Therefore, the algorithm is virtually performed by a simulation, and the power allocation message to each appliance and the command of supply power of each power source are transmitted after the algorithm is stopped in the state that the conditions of Expressions (50) and (51) are satisfied.

The time-shifted or interrupted appliance can again issue a power request message with a higher priority after a lapse of a certain time to perform arbitration to receive power allocation when there is spare energy in the supply power or when the priority is higher than the power source load factor.

(2) Correction and Rearbitration of Target Value in Periodic Activation Process

In the EoD system, the power arbitration is performed based on the power use plan and the power supply plan created in advance based on the predicted power use pattern. However, the actual action pattern of the consumer varies from day to day, and the pattern cannot completely coincide with the plan.

When the power of each appliance is significantly changed due to a change in the operation mode or the like, the power request message is issued to perform the arbitration in the event drive process. However, the actual appliances constantly generate small power fluctuations not associated with a clear change in the operation mode. Therefore, the gap between the power allocated to each appliance and the actual power consumption breaks the balance of supply and demand, and the restrictions of Expressions (50) and (51) may not be satisfied. Therefore, in the periodic activation process, the gap between the power use plan and the power use history is corrected, and the balance of supply and demand is arbitrated again.

First, the correction of the plan will be described. The target value

$$T_S \quad (s \in \{c, b\})$$

of the supply power of each power source used in the event drive process is provided by

$$T_S = \mathrm{PS}_S^{\mathrm{PLAN}}(t)$$

in the initial state according to the supply plan. In the periodic activation process, the object value is updated as in the following expressions based on the actual value of the supply power.

$$T_S = \begin{cases} \overline{\mathrm{PS}_S(t)} & \text{if } T'_S > \overline{\mathrm{PS}_S(t)} \\ \underline{\mathrm{PS}_S(t)} & \text{if } T'_S < \underline{\mathrm{PS}_S(t)} \\ T'_S & \text{otherwise} \end{cases} \tag{57}$$

$$T'_S = T_S - \frac{t_{now}}{T}\left(\mathrm{ES}_s(t_{now}) - \mathrm{ES}_s^{\mathrm{PLAN}}(t_{now})\right), \tag{58}$$

Here,

$$\frac{t_{now}}{T}$$

plays a role of a feedback gain, which is larger in the later stage of the plan period. The correction is performed to more strictly follow the plan.

$$ES_t(t)$$

indicates accumulated power supplied by the power source until the time, and

$$ES_t^{PLAN}$$

indicates an accumulated amount until the time of the power supply plan. Furthermore,

$$\frac{t}{T}$$

is the feedback gain. The feedback gain increases toward the end time, and the feedback gain is controlled to more quickly approach the plan value.

Next, the rearbitration of the balance of supply and demand will be described. The actual power consumption of an appliance always slightly fluctuates, and the appliance does not always consume the power allocated at the arbitration. Therefore, the condition of Expression (51) may not be satisfied. Since the total power consumption and the total supply power always physically coincide, not all power sources can maintain the supply power allocated at the arbitration with respect to the fluctuation of the total power consumption. In the present invention, it is assumed that the storage battery can be controlled to always maintain the allocated power, and the commercial power source absorbs the power fluctuation not associated with the power request.

If the actual power consumption is greater than the allocation power, Expression (51) may not be satisfied with respect to the target value Ts. In this case, the appliance and power source arbitration described in (1) is performed again. Conversely, if the power is not used more than the allocation power at the arbitration, there is a margin in the power, and the power can be allocated to the appliance in which the power is reduced or to the suspended or time-shifted appliance. However, such an appliance issues a request again every certain time and is arbitrated as described in (1). Therefore, the rearbitration is not particularly required in the periodic activation process.

(3) Monitoring of Maximum Instantaneous Power in Constant Monitoring Process

As described in (2), the storage battery can be controlled to always maintain the allocated power in the present invention, and the commercial power source absorbs the power fluctuation not associated with the power request. Consequently, the supply power of the commercial power source may exceed the maximum instantaneous power

$$\overline{PS_c}$$

due to the power fluctuation. Therefore, the supply power of the commercial power source is always monitored in the constant monitoring process, and the same arbitration as in (1) is performed to reduce the power when the power is about to exceed the maximum instantaneous power. As indicated in Expression (49), if the supply power exceeds the maximum instantaneous power

$$\overline{PS_c} \ ,$$

the power source load factor is 1, which is the maximum value. Therefore, the power of the appliances is to be reduced in the ascending order of priority until the supply power to the appliance with any priority is equal to or smaller than the maximum instantaneous power.

Example

(Experiment Result)

In the experiment, power consumption data of a single student and a married couple in the actual life for one day in a smart apartment that can measure the power consumption of each device is used to create a power use plan and a supply plan, and arbitration is performed by a simulation. A comparison with the conventional single power source EoD is also simulated and tested.

(Experiment Environment)

A power consumption pattern of the actual life in the smart apartment is used as a predicted use power pattern used to create a power use plan and as power request data for real-time arbitration. As shown in Figure 5, the smart apartment is for one or two people including one living room, one dining room with a kitchen, one bed room, one toilet, and one bathroom.

Nineteen types of appliances shown in Figure 27 are installed in the smart apartment. The smart taps are attached to all appliances, and the power consumption of each appliance can be measured and collected every 0.5 seconds. Data of one day, 24-hour life of a single subject and data of life of a married couple are used as real data.

In the simulation, the time of the use of each appliance and the operation mode are detected from the real life data, and the power is requested from the same appliance at the same time in the real-time arbitration. In this case, the use time (time for requesting power) is extended so that the accumulated power during operation is the same for an appliance, such as a pot, in which the use time becomes long in order to fulfill a certain function if the power is reduced. For an appliance, such as a lighting, in which the time to be used is determined, the use time does not change even if the power is reduced or suspended.

Figure 27 shows the appliances used in the experiment and the controllability of the appliances. Among these, a pot, a coffee maker, a rice cooker, and a dish washer are appliances that request power to attain certain accumulated power, and the other appliances are appliances that request power to attain certain request time.

For the power-adjustable appliances, the power to be allocated can be reduced from the request power in the arbitration, and the priority increases with an increase in the reduction of power. The time-shiftable appliances can wait for the allocation of power for a certain time after the power request, and the priority increases with an increase in the length of the waiting time. The interruptible appliances are appliances that can be suspended by the arbitration during operation, and the priority increases with an increase in the length of the suspended time.

(Preliminary Plan Phase)

Power consumption data of one day of a single and a couple is obtained every ten minutes ($\tau$ = 10 minutes), and the data is used as predicted demand D(t). Results of creation of power use plans and power supply plans are compared with the conventional EoD control system. In this case, restrictions of the commercial power source are set. The maximum instantaneous power of a single is

$$\overline{PS_c(t)} = 500\text{W} \ ,$$

the maximum instantaneous power of a couple is

$$\overline{PS_c(t)} = 1000\text{W} \ ,$$

and the ceiling

$$\overline{\text{ES}_c}$$

of the accumulated power is obtained by reducing the power consumption 15%.

The characteristics of the storage battery include the storage capacity

$$\overline{ES_b} = 1000Wh \; ,$$

the maximum charge-discharge power

$$\underline{PS_b} = -1000W \cdot \overline{PS_b} = 1000W \; ,$$

and the charge-discharge efficiency

$$a_b = a'_b = 0.83 \; .$$

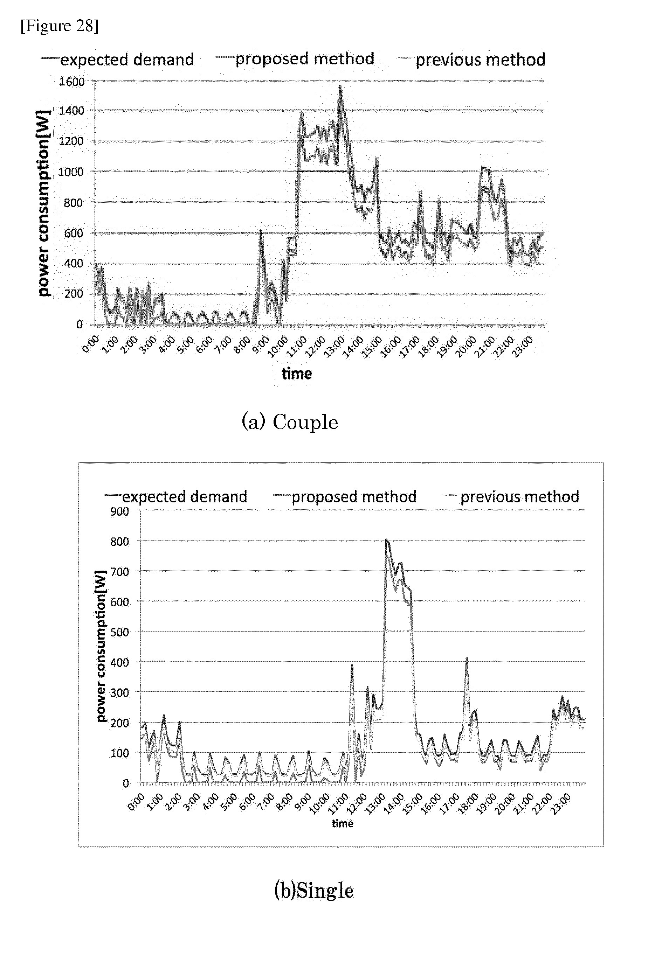

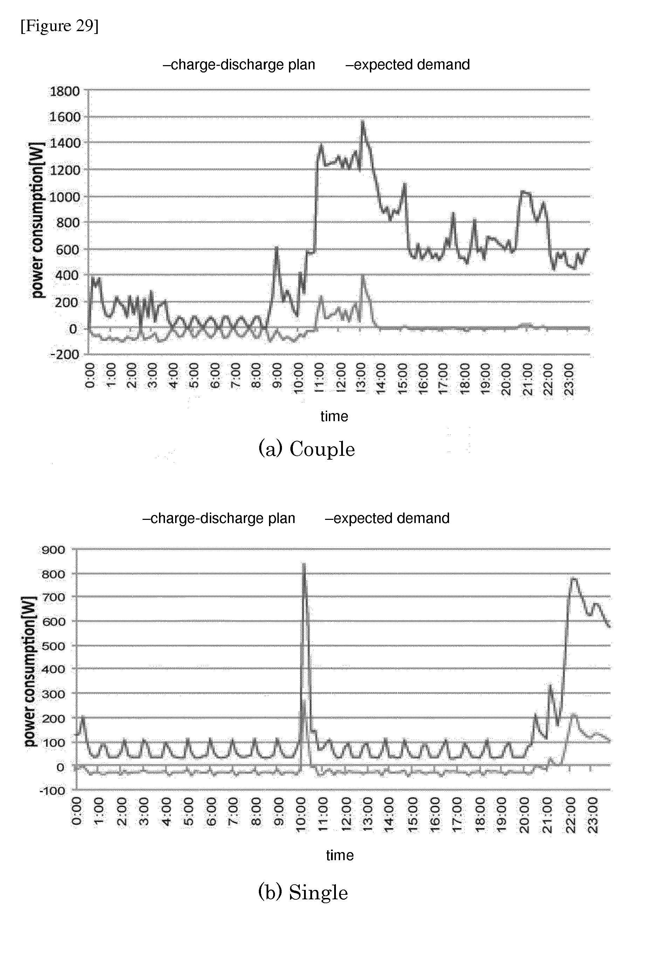

Figure 28 shows the created power use plans. Lines with highest values in Figure 28 indicate the predicted power consumption D(t). Lines with lowest values from around noon to night are power use plans created by the conventional EoD that does not use the storage battery. Lines with intermediate values around noon and lowest values from dawn to morning indicate power use plans according to the present invention. Figure 29 shows charge-discharge plans of the storage battery in this case.

It can be recognized from these results that in the conventional EoD, the power use plans are significantly reduced in time zones in which the predicted power consumption exceeds the maximum instantaneous power. On the other hand, the storage battery is charged in a time segment with a small power request in the present invention, and the power is discharged in a time zone with a large power request. Therefore, the amount of reduction is small, and the power use plans are close to the predicted power consumption, thereby reducing the dissatisfaction.

(Storage Battery Design based on Power Use Plan)

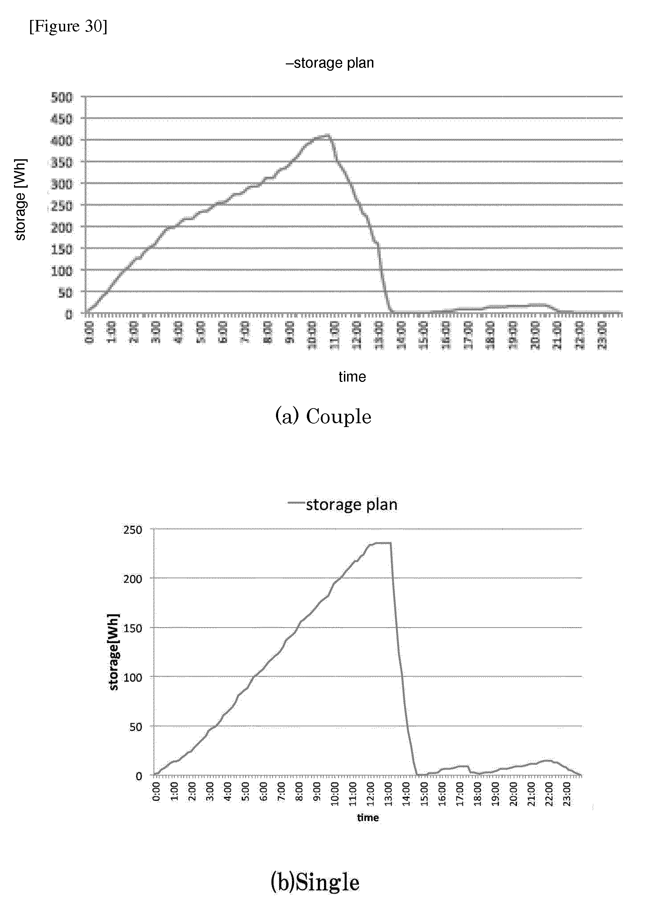

Figure 30 shows power (storage plans) charged in the storage battery in this case. It can be recognized from the maximum values of the storage plans that the storage capacity necessary for the life pattern of a single is about 300 Wh, and even for a couple, 411.2 Wh is sufficient.

In this way, an optimal storage battery is designed for the power consumption pattern to determine the optimal capacity of the storage battery.

Next, the maximum charge-discharge power of the storage battery is determined. The charge-discharge power can be determined from the maximum value (maximum discharge power) and the minimum value (maximum charge power) of the power supply plan (charge-discharge plan) of the storage battery. However, the power use plan and the supply plan are created based on the average power at each $\tau$, and the peak power generated at intervals equal to or smaller than $\tau$ is averaged and becomes small. Therefore, the power use plan value and the power supply plan value of the commercial power are distributed at each $\tau$ according to the ratio of the size of the predicted demand in the time $\tau$, and the difference between the values is set as charge-discharge power. The values are distributed so that the commercial power does not exceed the maximum instantaneous power.

Figure 29 shows the maximum discharge power (positive number) and the maximum charge power (negative number) at each $\tau$ of the storage battery in the case shown in Figure 28. In Figure 29, lines with high values indicate the predicted demand, and lines with low values indicate the charge-discharge plans.

It can be recognized from the result that while the maximum power use plan is 1400 W for a single and 2000 W for a couple, the maximum discharge power of the storage battery is lower than these, and 500 W is sufficient in both cases.

(In Case of Couple)

(Comparison of Arbitration Results for Power Request)

A simulation experiment of arbitration for an actual power request is conducted for a couple. For the power request in this case, data obtained by moving up, by two hours, the power consumption pattern of the actual life used to create the plan is used. The maximum instantaneous power and the ceiling in this case are the same as the conditions described above, and the plans illustrated above are also used for the power use plan and the supply plan.

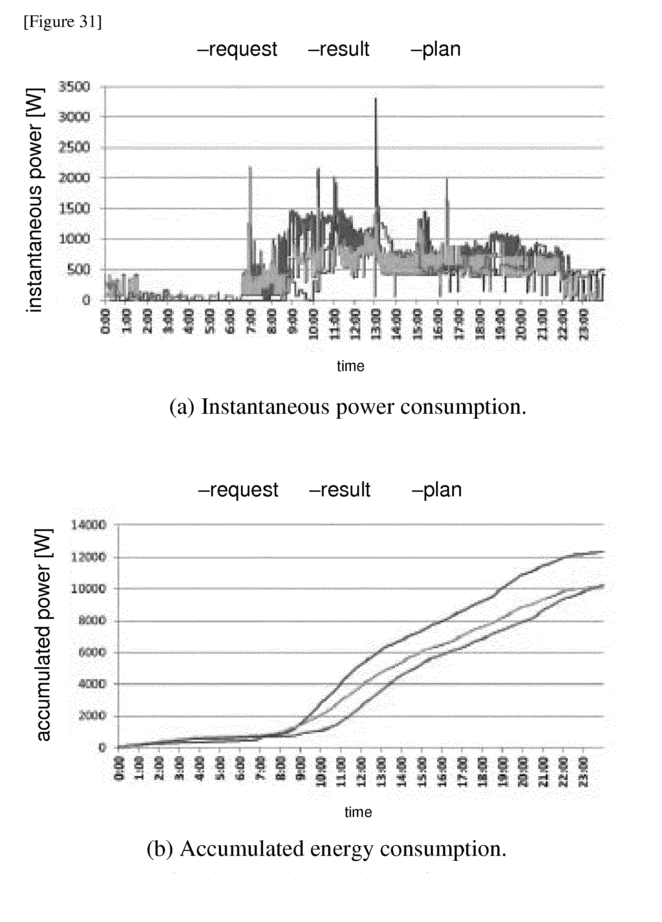

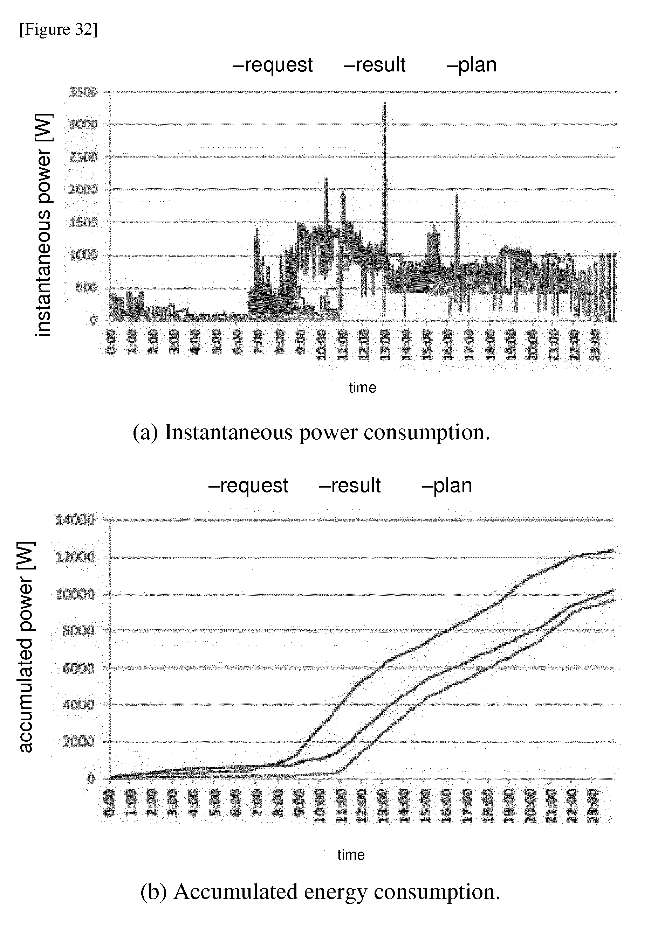

Figure 31 shows arbitration results of the storage battery system of the present invention, and Figure 32 shows arbitration results of the conventional EoD control system. Lines with high power values in Figures 31 and 32 indicate request power, lines with low power values indicate power used as a result of arbitration, and intermediate lines indicate power use plans.

It can be recognized from the results that the power cannot be supplied when the power exceeds the target value in the conventional EoD control system, and all request power equal to or greater than the maximum instantaneous power is rejected. The allocation power is significantly reduced, and the peak of the power request cannot be handled. On the other hand, power equal to or greater than the target value is supplied in earlier time zones in the present invention. It can also be recognized that while all power requests exceeding 1000 W are rejected in the conventional EoD control system, power equal to or greater than 1000 W is supplied in the present invention.

When there is a peak of power consumption at a time earlier than the predicted power pattern, power equal to or greater than the power plan cannot be allocated in the conventional method, and the allocation power is significantly reduced. On the other hand, the arbitration conditions are alleviated by the power source load factor in the present invention, and the power peak at an earlier time can be handled.

(Change in Dissatisfaction for Peak Cut)

To show effectiveness of the storage battery for the peak cut, a change in the dissatisfaction when the value of the maximum instantaneous power of the commercial power source is changed is checked. The maximum instantaneous power of the commercial power source is changed in increments of 20 W in a range of

$$300W \leq \overline{PS_c(t)} \leq 1500W$$

to create a plan and to simulate arbitration.

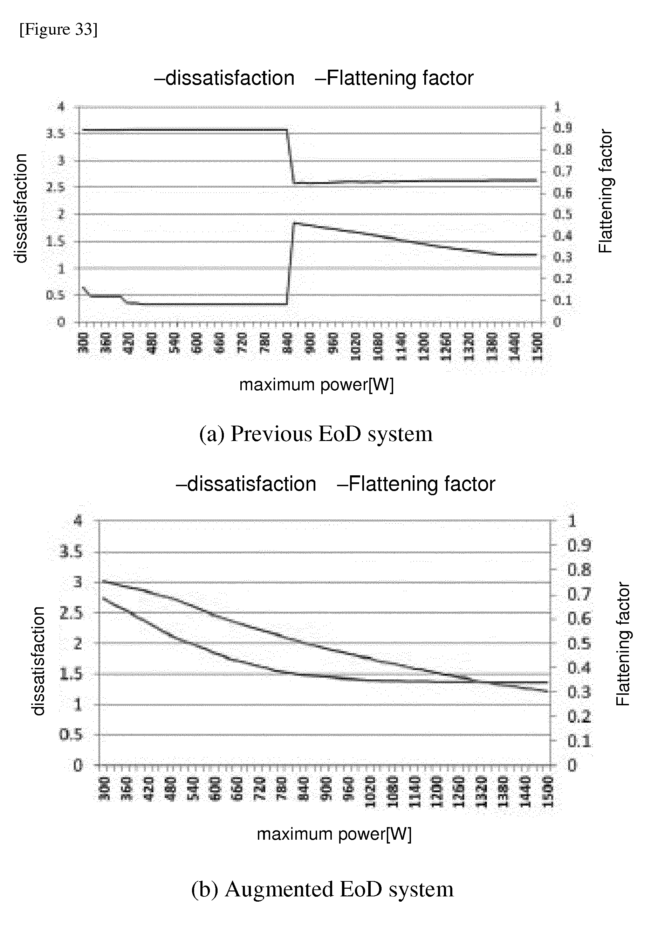

Figure 33 shows results of checking dissatisfaction DS (PD), in which the value of the maximum instantaneous power of the commercial power source is changed, and power fluctuation of the commercial power source based on the flattening factor (Flattening Factor) in order to evaluate the effectiveness of the peak cut by evaluating how much power is supplied with respect to the power request based on the value of dissatisfaction.

The flattening factor is evaluated by the following Expression (59) as a ratio of average power with respect to the maximum power.

$$\text{FF} = \frac{\frac{1}{|T|}\sum_t^T PS_c(t)}{\max_{t \in T} PS_c(t)} \tag{59}$$

Figure 33(a) shows results of the conventional EoD control system, and Figure 33(b) shows results of the present invention using the storage battery. In the conventional EoD control system, when the maximum instantaneous power falls below 840 W, the dissatisfaction indicated by the above line rapidly increases. The flattening factor is reduced, and the maximum instantaneous power from the commercial power source is reduced.

On the other hand, it can be recognized that in the present invention using the storage battery, relatively low dissatisfaction can be maintained even when the maximum instantaneous power of the commercial power source is small. As a result, it can be recognized that comfortable life can be maintained in the present invention even if the maximum instantaneous power is reduced.

The reason that the dissatisfaction rapidly increases at 840 W in the conventional EoD control system is that an appliance (coffee maker) with large request power exceeds the maximum instantaneous power and cannot be used at all.

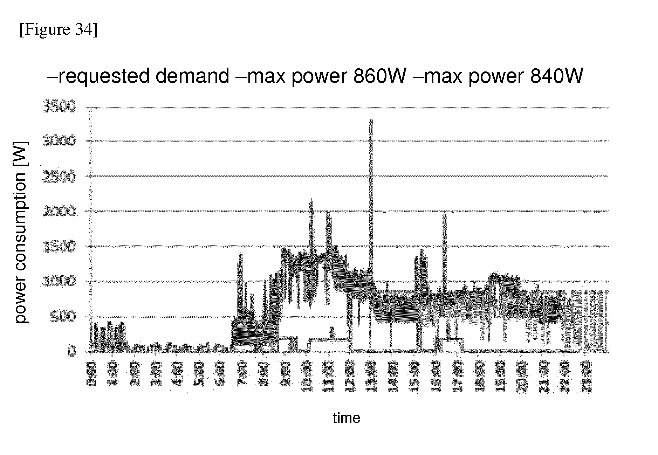

Figure 34 shows arbitration results when the maximum instantaneous power in the conventional EoD system is 860 W and 840 W. In this case, the reason that the flattening factors in the conventional EoD system are significantly reduced at the same time is that the coffee maker continues to wait, and the priority is increased. As a result, other appliances with lower priorities cannot be used, and the overall average power is significantly reduced.

Therefore, decent life cannot be attained with 840 W or lower maximum instantaneous power in the conventional method.

(In Case of Single)

(Comparison of Arbitration Results for Power Request)

As in the case of a couple, arbitration results for a power request are also compared in the case of a single. As in the case of a couple, data obtained by moving up, by two hours, the power consumption pattern of the actual life used to create the plan is used for the power request in this case. The maximum instantaneous power and the ceiling in this case are the same as in the conditions described above, and the plans illustrated above are also used for the power use plan and the supply plan.

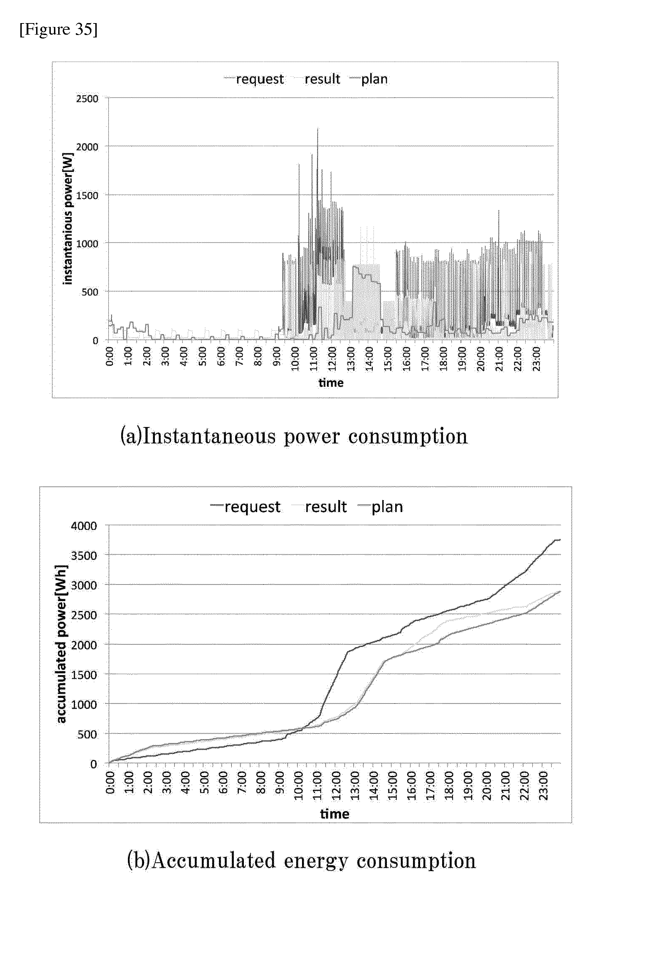

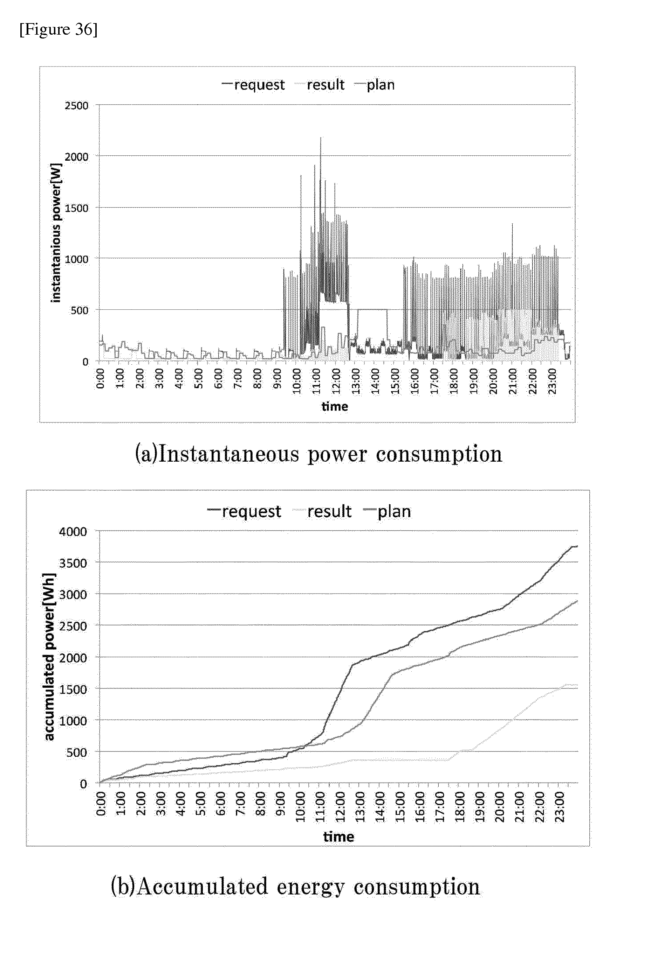

Figure 35 shows arbitration results of the storage battery system of the present invention, and Figure 36 shows arbitration results of the conventional EoD control system. In Figures 35 and 36, lines with high power values indicate request power, lines with low power values indicate power used as a result of arbitration, and intermediate lines indicate power use plans.

It can be recognized from the results that the power cannot be supplied when the power exceeds the target value in the conventional EoD control system, and all request power equal to or greater than the maximum instantaneous power is rejected. The allocation power is significantly reduced, and the peak of the power request cannot be handled. On the other hand, power equal to or greater than the target value is supplied in earlier time zones in the present invention. It can also be recognized that while all power requests exceeding 500 W are rejected in the conventional EoD control system, power equal to or greater than 500 W is supplied in the present invention.

(Change in Dissatisfaction for Peak Cut)

As in the case of a couple, the change in the dissatisfaction when the value of the maximum instantaneous power for the commercial power source is changed is checked in order to show the effectiveness of the storage battery for the peak cut. The maximum instantaneous power of the commercial power source is changed in increments of 20 W in a range of

$$300W \leq \overline{PS_c(t)} \leq 1500W$$

to create a plan and to simulate arbitration.

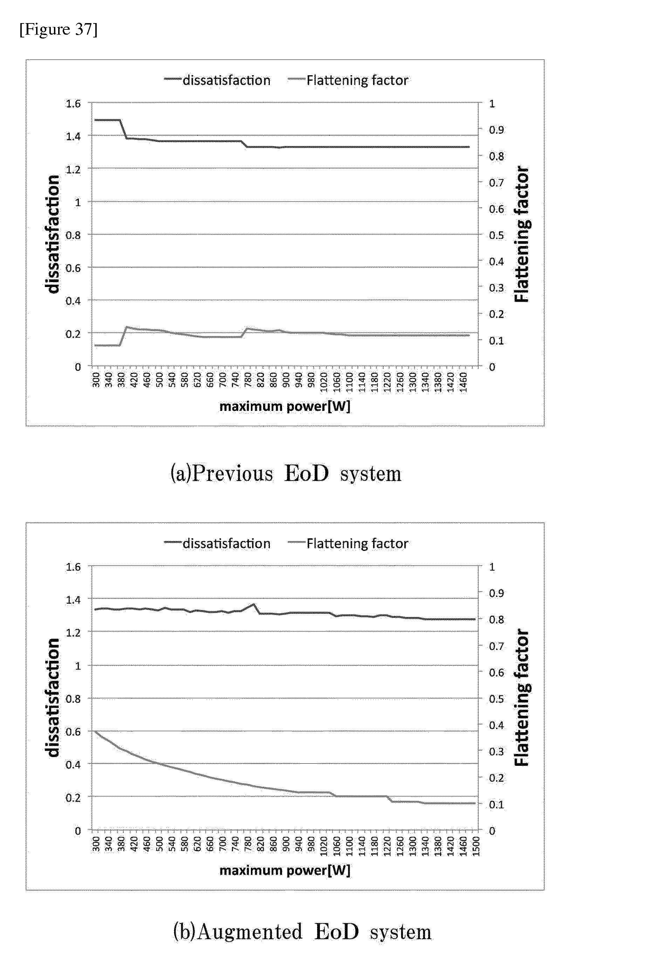

Figure 37 shows results of checking dissatisfaction DS (PD), in which the value of the maximum instantaneous power of the commercial power source is changed, and power fluctuation of the commercial power source based on the flattening factor (Flattening Factor) in order to evaluate the effectiveness of the peak cut by evaluating how much power is supplied with respect to the power request based on the value of dissatisfaction.

The flattening factor is evaluated by the following Expression (60) as a ratio of average power with respect to the maximum power.

$$\text{FF} = \frac{\frac{1}{|T|}\sum_t^T PS_c(t)}{\max\limits_{t \in T} PS_c(t)} \tag{60}$$

Figure 37(a) shows results of the conventional EoD control system, and Figure 37(b) shows results of the present invention using the storage battery. Unlike in the case of a couple, the dissatisfaction indicated by an upper line rapidly increases when the maximum instantaneous power falls below 780 W and 400 W in the conventional EoD system. The flattening factor slightly decreases, but does not significantly change, and the maximum instantaneous power from the commercial power source is not significantly reduced.

On the other hand, the dissatisfaction hardly changes in the present invention using the storage battery, and particularly, the dissatisfaction when the maximum instantaneous power of the commercial power source is small is about the same as when the maximum instantaneous power is large. It can be recognized that the flattening factor increases with a decrease in the maximum instantaneous power.

Comparative Example 1

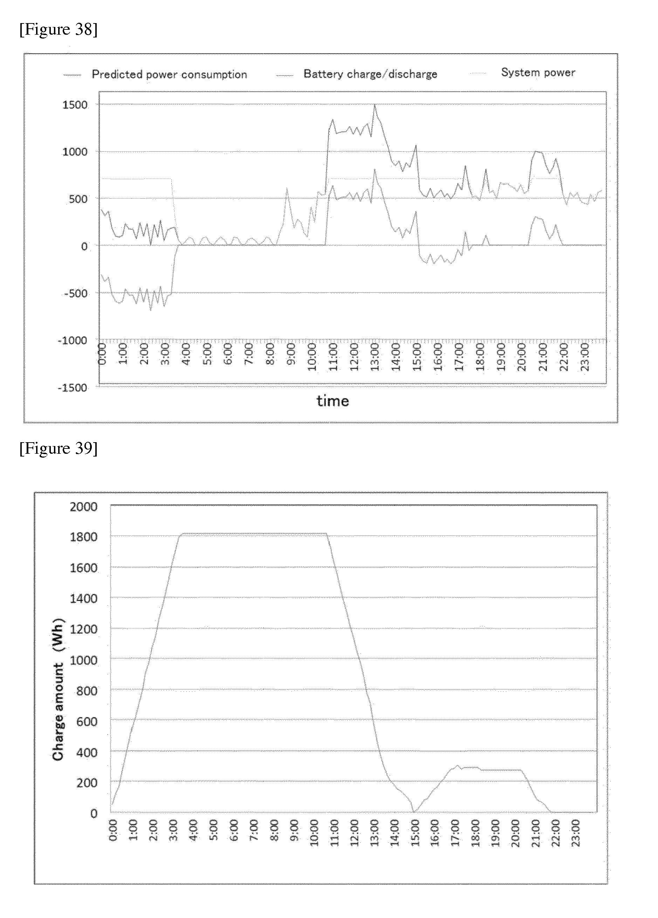

In a case of a couple, the on-demand power control is not performed, the maximum instantaneous power supplied from the commercial power source (system power source) is 700 W, and the sum of the instantaneous power supplied from the commercial power source and the instantaneous power supplied from the storage battery is 1500 W at the maximum. The capacity of the storage battery necessary for these conditions is obtained. The storage battery with the obtained capacity is used along with the commercial power source to supply power to appliances installed in rooms of a couple. Figure 38 shows the results.

In Figure 38, a line with highest values at about 12 o'clock and 21 o'clock among three lines shows a transition of predicted use power. A line that is flat at dawn, from 11 o'clock to 17 o'clock, and around 21 o'clock shows a transition of power supplied from the commercial power source. A line that is the lowest at dawn and that is flat up to about 11 o'clock shows power based on charge and discharge of the storage battery.

Figure 39 shows a notion for obtaining the capacity of the storage battery necessary for the transition of the instantaneous power shown in Figure 38. It can be understood in Figure 39 that the power charged in the morning is discharged with the subsequent increase in the required instantaneous power, and the power is temporarily completely discharged at 15 o'clock. The capacity necessary for the storage battery can be reduced if the power is not completely discharged. However, the capacity of the storage battery in which the power is temporarily completely discharged is the minimum capacity necessary for the storage battery.

As a result, the minimum capacity necessary for the storage battery is 1812 Wh in this example.

Comparative Example 2

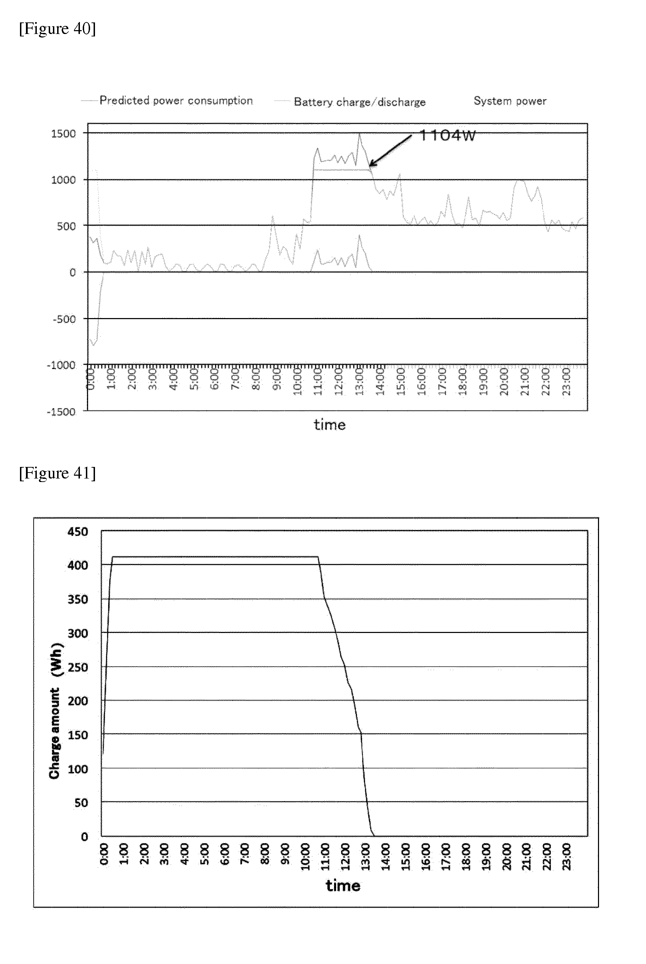

In a case of a couple, the on-demand power control is not performed, the storage battery capacity is 411.2 Wh, and the sum of the instantaneous power supplied from the commercial power source and the instantaneous power supplied from the storage battery is 1500 W at the maximum. Under these conditions, the power is optimized to minimize the peak power. In this example, the storage battery capacity is the capacity obtained based on the example of Figure 30. The storage battery with the capacity is used along with the commercial power source to supply power to appliances installed in rooms of a couple. Figure 40 shows the results.

In Figure 40, a line indicating the highest value at about 12 o'clock among three lines indicates a transition of predicted use power. A line that has high values after 1 o'clock in the night and that is flat at around 12 o'clock indicates a transition of power supplied from the commercial power source. At hours other than these hours, the predicted use power and the commercial power source make a transition at the same instantaneous power. A line that is lowest at about 0 o'clock in the night and that is flat up to about 11 o'clock with a small peak around 12 o'clock shows power based on the charge and discharge of the storage battery. As is evident from Figure 40, the peak of the instantaneous power supplied from the commercial power source requires 1104 W, which is higher power than the result of Comparative Example 1.

Figure 41 shows a transition of the charge amount of the storage battery used in the example shown in Figure 40. In Figure 41, the power charged in the morning is discharged with an increase in the instantaneous power at around 12 o'clock. The discharge is completely finished at about 13 o'clock, and power is not charged until after 0 o'clock in the night. According to this example, the capacity of the storage battery is clearly insufficient, and the discharge is possible only in a short time around noon.

Comparative Example 3

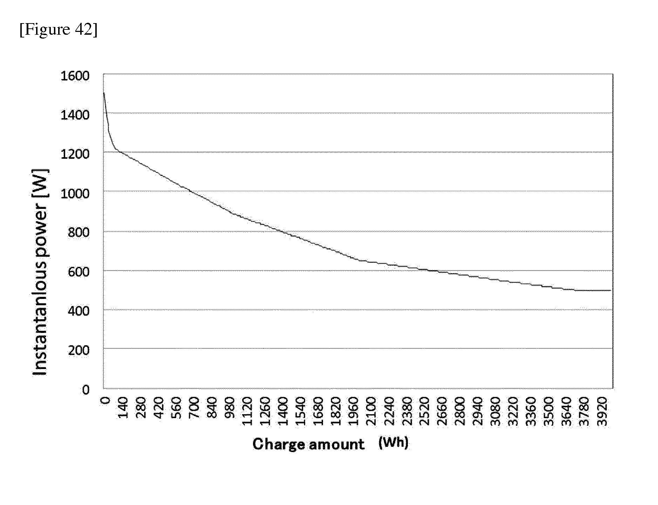

In a case of a couple, the on-demand power control is not performed, the storage battery capacity is changed by 10 Wh from 10 Wh to 4000 Wh, and the maximum instantaneous power at each storage battery capacity is optimized and obtained to minimize the peak power. Under the condition that the sum of the instantaneous power supplied from the commercial power source and the instantaneous power supplied from the storage battery is 1500 W at the maximum, the power is optimized to minimize the peak power. Figure 42 shows the results.

In Figure 42, the values of the maximum instantaneous power when the storage battery capacity is 1812 Wh and 411.2 Wh correspond to the results of Comparative Examples 1 and 2, respectively. However, it can be recognized that as a result of controlling the commercial power source and the storage battery while performing the on-demand power control as in the present invention, the maximum instantaneous power stays at 700 W, which is significantly low power, even when the storage battery capacity is 411.2 Wh.

(Conclusion)

The storage battery system of the present invention can control power sources according to various life patterns by extending the EoD control system to multiple power sources including a storage battery. The storage battery capacity can be appropriately designed, and an appropriate charge-discharge management system can be formed. Examples of the multiple power sources include a commercial power source and power sources (solar power, gas power, and the like) other than the storage battery, and extension to an electric vehicle is possible.

**Claims**

1.  An on-demand multiple power source management system comprising:

    a plurality of power sources; a plurality of electric devices; smart taps connected to the electric devices; a multiple power source management apparatus that includes a memory and that controls supply of power to the electric devices; and a network for the multiple power source management apparatus connected through the smart taps, wherein the multiple power source management apparatus comprises: power supply plan generation means for setting a power use plan of a commercial power source as initial values of a supply plan of a capacitor, searching a time zone with a maximum dissatisfaction among the time zones of the initial values to set the time zone as a time-shift destination, searching a time zone with a minimum dissatisfaction to set the time zone as a time-shift source, and repeating the process until the dissatisfaction of the time-shift destination is smaller than the dissatisfaction of the time-shift source to generate a power supply plan; and arbitration means for repeating a process of selecting a device with a minimum priority among an electric device that has requested power and electric devices in operation, selecting a power source with a maximum power source load factor, reducing or stopping power of the electric device, and reducing supply power of the power source by an amount of the reduced power until the following Expressions (1) and (2) are satisfied, thereby performing arbitration to satisfy Expressions (1) and (2) at the same time.

$$\forall a \in A, \forall s \in S : \mathrm{Pri}_a\big(\mathrm{PD}_a^{\mathrm{REQ}}\big) \geq \mathrm{LF}_s\big(\mathrm{PS}_s^{\mathrm{REQ}}\big) \tag{1}$$

$$\sum_{a \in A} PD_a^{REQ} = \sum_{s \in S} PS_s^{RES} \tag{2}$$

2.  The on-demand multiple power source management system according to claim 1, wherein the plurality of power sources include a combination of a commercial power source as well as a capacitor and at least one power source of a capacitor of an electric vehicle and solar power.

3.  The on-demand multiple power source management system according to claim 2, wherein the generated power supply plan is an optimal capacity of the storage battery.

4.  A program causing a computer to operate as a multiple power source management apparatus in an on-demand multiple power source management system, the on-demand multiple power source management system comprising: a plurality of power sources; a plurality of electric devices; smart taps connected to the electric devices; the multiple power source management apparatus that includes a memory and that controls supply of power to the electric devices; and a network for the multiple power source management apparatus connected through the smart taps, the program further causing the computer to cause the multiple power source management apparatus to execute: a process of setting a power use plan of a commercial power source as initial values of a supply plan of a capacitor, searching a time zone with a maximum dissatisfaction among the time zones of the initial values to set the time zone as a time-shift destination, searching a time zone with a minimum dissatisfaction to set the time zone as a time-shift source, and repeating the process until the dissatisfaction of the time-shift destination is smaller than the dissatisfaction of the time-shift source to generate a power supply plan; and a process of repeating a process of selecting a device with a minimum priority among an electric device that has requested power and electric devices in operation, selecting a power source with a maximum power source load factor, reducing or stopping power of the electric device, and reducing supply power of the power source by an amount of the reduced power until the following Expressions (1) and (2) are satisfied, thereby performing arbitration to satisfy Expressions (1) and (2) at the same time.

$$\forall a \in A, \forall s \in S : \text{Pri}_a\left(\text{PD}_a^{\text{REQ}}\right) \geq \text{LF}_s\left(\text{PS}_s^{\text{REQ}}\right) \qquad (1)$$

$$\sum_{a \in A} PD_a^{REQ} = \sum_{s \in S} PS_s^{RES} \qquad (2)$$

5. A computer-readable recording medium recording the program according to claim 4.

EP 2 874 264 A1

[Figure 1]

[Figure 2]

EP 2 874 264 A1

[Figure 3]

[Figure 4]

[Figure 5]

ARRANGEMENT OF APPLIANCES

[Figure 6]

[Figure 7]

[Figure 8]

EP 2 874 264 A1

[Figure 9-1]

[Figure 9-2]

: POWER USE PLAN
: INITIAL PLAN VALUE

Wh

INITIAL PLAN
VALUE OF POWER

τ

[Figure 9-3]

☒ :POWER USE PLAN

☒ :INITIAL PLAN
 VALUE

Wh

INITIAL PLAN
VALUE OF POWER

τ

EP 2 874 264 A1

[Figure 10]

[Figure 11]

[Figure 12]

[Figure 13]

[Figure 14]

[Figure 15]

REQUEST APPLIANCE

DYNAMIC PRIORITY
CONTROL APPARATUS

OTHER APPLIANCES

1. POWER REQUEST MESSAGE

DETERMINE WHETHER EACH
APPLIANCE IS PERMITTED ACCORDING
TO PRIORITY OF APPLIANCE

2. POWER ALLOCATION MESSAGE

2'. REFUSAL MESSAGE

3. INTERRUPTION MESSAGE

4. REALLOCATION MESSAGE

EP 2 874 264 A1

[Figure 16]

ST    **11**

**10**

MEMORY

POWER SUPPLY PLAN
GENERATION MEANS

SUPPLY POWER TARGET VALUE
UPDATE MEANS

POWER AND POWER SOURCE
ARBITRATION MEANS

[Figure 17]

[Figure 18]

```
        ╭─────────────────────╮
        │        START        │
        │    PREPROCESSING    │
        ╰─────────────────────╯
                    │
                    ▼
   ┌─────────────────────────────────────┐
   ║                                     ║      S1
   ║   SETTING PROCESS OF POWER USE      ║
   ║              PLAN                   ║
   ║                                     ║
   └─────────────────────────────────────┘
                    │
                    ▼
 ┌───────────────────────────────────────────┐
 ║                                           ║
 ║   SETTING PROCESS OF INITIAL TARGET VALUE ║
 ║                                           ║
 ║   STORE INITIAL TARGET VALUE IN MEMORY OF ║
 ║   DYNAMIC PRIORITY CONTROL APPARATUS      ║
 ║                                           ║
 └───────────────────────────────────────────┘
```

[Figure 19]

```
┌─────────────────────────────────────────┐
│   START DYNAMIC PRIORITY CONTROL         │
│             APPARATUS                    │
└─────────────────────────────────────────┘
                    │
                    ▼
┌─────────────────────────────────────────┐
│   UPDATE PROCESS OF INITIAL TARGET       │      S3
│             VALUE                        │
└─────────────────────────────────────────┘
                    │
                    ▼
┌─────────────────────────────────────────┐
│   ARBITRATION PROCESS OF PRIORITY        │      S5
└─────────────────────────────────────────┘
```

[Figure 20]

EP 2 874 264 A1

**S1** — POWER USE PLAN SETTING PROCESS

ADD POWER CONSUMPTION TRANSMITTED FROM ST AT INTERVALS OF $\tau$ AND CONVERT TO INSTANTANEOUS POWER AND ACCUMULATED POWER — **S11**

SET CEILING C(Wh) AND MAXIMUM INSTANTANEOUS POWER M(W) OF POWER USE PLAN FROM THE INSTANTANEOUS POWER AND THE ACCUMULATED POWER, ASSIGN THE VALUES TO EXPRESSIONS (1) AND (2), CALCULATE INITIAL TARGET VALUE $T_0(t)(W)$, AND STORE IT IN MEMORY. — **S13**

END

[Figure 21]

```
       S3   ( INITIAL TARGET VALUE )
             (  UPDATE PROCESS     )
                      │
                      ▼
┌──────────────────────────────────────────────────┐
│ CALCULATE DISTRIBUTION POWER BY DISTRIBUTION METHOD │   S31
│ OF DIFFERENCE FROM DIFFERENCE BETWEEN INSTANTA-    │
│ NEOUS POWER OF INITIAL TARGET VALUE AND ACTUAL     │
│ INSTANTANEOUS POWER AND ADD THE DISTRIBUTION POWER │
│ TO INSTANTANEOUS POWER OF SUBSEQUENT INITIAL TARGET│
│ VALUE TO CALCULATE UPDATED INITIAL TARGET VALUE    │
└──────────────────────────────────────────────────┘
                      │
                      ▼
┌──────────────────────────────────────────────────┐
│ CALL UP MAXIMUM INSTANTANEOUS POWER FROM MEMORY    │   S33
│ AND COMPARE THE UPDATED INITIAL TARGET VALUE AND   │
│ MAXIMUM INSTANTANEOUS POWER                        │
└──────────────────────────────────────────────────┘
                      │
                      ▼
                                          S35
              ╱ UPDATED        ╲                      No
            ╱  INITIAL TARGET VALUE ╲ ──────────────┐
            ╲ < MAXIMUM INSTANTANEOUS ╱              │
              ╲   POWER?       ╱                     │
                    │                                │
                   Yes                               │
                    ▼                                │
┌──────────────────────────────────────────┐        │
│ INSTANTANEOUS POWER OF SUBSEQUENT INITIAL  │  S37   │
│ TARGET VALUE IS UPDATED WITH UPDATED INITIAL│       │
│ TARGET VALUE                               │        │
└──────────────────────────────────────────┘        │
                    │                                ▼
                    │          ┌──────────────────────────┐
                    │          │ UPDATE THE UPDATED INITIAL │  S39
                    │          │ TARGET VALUE WITH MAXIMUM   │
                    │          │ INSTANTANEOUS POWER         │
                    │          └──────────────────────────┘
                    │                     │
                    ◄─────────────────────┘
                    ▼
                ( END )
```

[Figure 22-1]

**S5** ( PRIORITY ARBITRATION PROCESS )

RECEIVE POWER REQUEST MESSAGE FROM ST — **S51**

CALL UP AND ADD POWER CONSUMPTION OF DEVICE THAT HAS TRANSMITTED MESSAGE AND DEVICES IN OPERATION FROM MEMORY AT RECEIVED TIME TO CALCULATE TOTAL VALUE OF POWER CONSUMPTION OF DEVICES — **S53**

REFER TO TABLE 3 TO CALCULATE PRIORITIES OF THE DEVICES BASED ON PRIORITY FUNCTIONS AND STORE THE VALUES IN MEMORY — **S55**

CALCULATE POWER SOURCE LOAD FACTOR OF EACH POWER SOURCE BASED ON POWER SOURCE LOAD FACTOR FUNCTION AND SUPPLY POWER OF EACH POWER SOURCE AND STORE IT IN MEMORY — **S56**

SELECT DEVICE WITH MINIMUM PRIORITY AND POWER SOURCE WITH MAXIMUM POWER SOURCE LOAD FACTOR FROM THE MEMORY — **S57**

**S59**
MAXIMUM POWER SOURCE LOAD FACTOR < MINIMUM PRIORITY? — **No** → ( 1 )

**Yes**

TRANSMIT PERMISSION MESSAGE TO ST OF DEVICE THAT HAS TRANSMITTED MESSAGE

( END )

[Figure 22-2]

( 1 )

DETERMINE WHETHER THE DEVICE IS
ADJUSTABLE WITH REFERENCE TO TABLE 2          **S65**

S67

ADJUSTABLE?                    **No** → ( 2 )

**Yes**

TRANSMIT INTERRUPTION MESSAGE FOR
REDUCING POWER TO THE DEVICE                  **S69**

REDUCE SUPPLY POWER FROM THE POWER
SOURCE BY AMOUNT OF THE REDUCED POWER         **S70**

RECALCULATE PRIORITY OF THE DEVICE AND POWER SOURCE LOAD FACTOR
OF THE POWER SOURCE BASED ON POWER CONSUMPTION AND SUPPLY
POWER AFTER REDUCTION                         **S71**

TO S56

[Figure 22-3]

**( 2 )**

DETERMINE WHETHER THE DEVICE IS ST THAT HAS
TRANSMITTED REQUEST MESSAGE AND IS TIME-SHIFTABLE  **S73**

ST THAT
HAS TRANSMITTED MESSAGE AND
TIME-SHIFTABLE?  **S75**

**No** → **( 3 )**

**Yes**

TRANSMIT REFUSAL MESSAGE TO ST OF THE
DEVICE  **S77**

REDUCE SUPPLY POWER FROM THE POWER
SOURCE BY AMOUNT OF THE POWER REDUCTION  **S78**

RECALCULATE PRIORITY OF THE DEVICE AND POWER SOURCE
LOAD FACTOR OF THE POWER SOURCE BASED ON POWER
CONSUMPTION AND SUPPLY POWER AFTER REDUCTION  **S79**

TO S56

[Figure 22-4]

( 3 )

DETERMINE WHETHER THE DEVICE IS NOT ST THAT HAS TRANSMITTED REQUEST MESSAGE AND IS INTERRUPTIBLE — S81

S83

NOT ST THAT HAS TRANSMITTED REQUEST AND IS INTERRUPTIBLE?

No

Yes

TRANSMIT REFUSAL MESSAGE TO ST OF THE DEVICE — S85

REDUCE SUPPLY POWER FROM THE POWER SOURCE BY AMOUNT OF THE POWER REDUCTION — S86

RECALCULATE PRIORITY OF THE DEVICE AND POWER SOURCE LOAD FACTOR OF THE POWER SOURCE BASED ON POWER CONSUMPTION AND SUPPLY POWER AFTER REDUCTION. — S87

TO S56

END

[Figure 23-1]

**S9** (CONSTANT MONITOR-ING PROCESS)

CALL UP MAXIMUM INSTANTANEOUS POWER FROM MEMORY — **S91**

CALL UP AND ADD POWER CONSUMPTION OF DEVICES IN OPERATION FROM MEMORY EVERY CERTAIN PERIOD δ TO CALCULATE TOTAL VALUE AND STORE IT IN MEMORY — **S93**

REFER TO TABLE 3 TO CALCULATE PRIORITIES OF THE DEVICES BASED ON PRIORITY FUNCTIONS AND STORE THE VALUES IN MEMORY — **S95**

COMPARE THE MAXIMUM INSTANTANEOUS POWER AND THE TOTAL VALUE OF POWER CONSUMPTION — **S97**

**S99** TOTAL VALUE OF POWER CONSUMPTION < MAXIMUM INSTANTANEOUS POWER?

No

Yes

END

CALL UP THE PRIORITIES FROM MEMORY AND SELECT DEVICE WITH MINIMUM VALUE — **S101**

(4)

[Figure 23-2]

( 4 )

DETERMINE WHETHER THE DEVICE IS
ADJUSTABLE WITH REFERENCE TO TABLE 2    S103

S105

ADJUSTABLE?    No    →  ( 5 )

Yes

TRANSMIT INTERRUPTION MESSAGE FOR
REDUCING POWER TO THE DEVICE    S107

UPDATE TOTAL VALUE OF POWER
CONSUMPTION BASED ON REDUCED POWER    S109

TO S99

[Figure 23-3]

(5)

```
┌──────────────────────────────────────┐
│   DETERMINE WHETHER THE DEVICE IS      │   S111
│            INTERRUPTIBLE               │
└──────────────────────────────────────┘
                    │
                    ▼
              ╱──────────╲              S113
         ╱───  INTERRUPTIBLE?  ───╲         No
         ╲──────────────────────╱
                    │ Yes
                    ▼
┌──────────────────────────────────────┐
│   TRANSMIT REFUSAL MESSAGE TO ST OF    │   S115
│            THE DEVICE                  │
└──────────────────────────────────────┘
                    │
                    ▼
┌──────────────────────────────────────┐
│ UPDATE TOTAL VALUE OF POWER CONSUMPTION BY │   S117
│ EXCLUDING POWER CONSUMPTION OF THE DEVICE  │
└──────────────────────────────────────┘
                    │
                    ▼
                 TO S99


                  ( END )
```

[Figure 24]

[Figure 25]

（a）

Load factor

（b）

[Figure 26]

[Figure 27]

| Controlability | Appliance |
|---|---|
| Adjustable<br>Time-shiftable<br>Interruptable | pot |
| Adjustable<br>Interruptable | air conditioner, heater |
| Adjustable | lighting (Living room, Bedroom, kitchen, corridor, toilet, bathroom), TV (adjust brightness), electric carpet |
| Time-shiftable<br>Interruptable | Coffee maker |
| Interruptible | refrigerator |
| Time-shiftable | Rice cooker, washing machine |
| Non-controllability<br>(priority stays 1) | DVD player, microwave oven, bidet-toilet, IH cooking heater |

[Figure 28]

(a) Couple

(b)Single

[Figure 29]

−charge-discharge plan    −expected demand

(a) Couple

−charge-discharge plan    −expected demand

(b) Single

[Figure 30]

(a) Couple

(b)Single

[Figure 31]

−request    −result    −plan

(a) Instantaneous power consumption.

−request    −result    −plan

(b) Accumulated energy consumption.

[Figure 32]

(a) Instantaneous power consumption.

(b) Accumulated energy consumption.

[Figure 33]

–dissatisfaction    –Flattening factor

(a) Previous EoD system

–dissatisfaction    –Flattening factor

(b) Augmented EoD system

[Figure 34]

−requested demand −max power 860W −max power 840W

[Figure 35]

(a)Instantaneous power consumption

(b)Accumulated energy consumption

[Figure 36]

(a)Instantaneous power consumption

(b)Accumulated energy consumption

[Figure 37]

(a)Previous EoD system

(b)Augmented EoD system

[Figure 38]

[Figure 39]

[Figure 40]

[Figure 41]

[Figure 42]

<table>
<tr><td colspan="2">**INTERNATIONAL SEARCH REPORT**</td><td>International application No.<br>PCT/JP2013/067927</td></tr>
</table>

**A. CLASSIFICATION OF SUBJECT MATTER**
*H02J3/00*(2006.01)i, *G06Q10/00*(2012.01)i, *G06Q50/06*(2012.01)i, *H02J13/00*
(2006.01)i

According to International Patent Classification (IPC) or to both national classification and IPC

**B. FIELDS SEARCHED**

Minimum documentation searched (classification system followed by classification symbols)
H02J3/00, G06Q10/00, G06Q50/06, H02J13/00

Documentation searched other than minimum documentation to the extent that such documents are included in the fields searched
Jitsuyo Shinan Koho          1922–1996   Jitsuyo Shinan Toroku Koho   1996–2013
Kokai Jitsuyo Shinan Koho   1971–2013   Toroku Jitsuyo Shinan Koho   1994–2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2005-295714 A  (NEC Corp.),<br>20 October 2005 (20.10.2005),<br>entire text; all drawings<br>(Family: none) | 1-5 |
| A | JP 2012-115115 A  (Mitsubishi Electric Corp.),<br>14 June 2012 (14.06.2012),<br>entire text; all drawings<br>(Family: none) | 1-5 |
| A | WO 2010/079747 A1  (Panasonic Corp.),<br>15 July 2010 (15.07.2010),<br>entire text; all drawings<br>& JP 2010-161828 A      & US 2011/0270456 A1<br>& EP 2387128 A1          & CN 102341991 A | 1-5 |

☒  Further documents are listed in the continuation of Box C.     ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>04 September, 2013 (04.09.13) | Date of mailing of the international search report<br>17 September, 2013 (17.09.13) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2013/067927

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2010-204833 A  (Toshiba Corp.),<br>16 September 2010 (16.09.2010),<br>entire text; all drawings<br>& US 2010/0222934 A1    & EP 2226754 A1<br>& CN 102004841 A | 1-5 |
| A | JP 2012-135099 A  (Panasonic Corp.),<br>12 July 2012 (12.07.2012),<br>entire text; all drawings<br>(Family: none) | 1-5 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011154495 A
- JP 2008152798 A
- JP 2010193562 A

**Non-patent literature cited in the description**

- **TAKEKAZU KATO.** i-Energy and Smart Grid. *IEICE technical report,* 19 January 2009, 133-138
- **PROFESSOR TAKASHI MATSUYAMA.** i-Energy and Smart Grid. *Graduate School,* 29 July 2009, 21